# FASCICULE DE BREVET EUROPEEN

(11) **EP 2 271 957 B1**
(45) Date de publication et mention de la délivrance du brevet: **02.11.2016**
(21) Numéro de dépôt: 09730891.0
(22) Date de dépôt: 20.03.2009
(51) Int. Cl.: G02B 6/00, G09F 13/04, H05K 1/18, G02F 1/13357, F21V 8/00

(54) **PROCÉDÉ DE FABRICATION D'UN MODULE D'ECLAIRAGE, EN PARTICULIER DE RETRO-ECLAIRAGE**
VERFAHREN ZUR HERSTELLUNG EINES BELEUCHTUNGSMODULS, INSBESONDERE EINES RÜCKBELEUCHTUNGSMODULS
PROCESS FOR MANUFACTURING A LIGHTING MODULE, IN PARTICULAR A BACKLIGHTING MODULE

(30) Priorité: 20.03.2008 FR 0851808
(43) Date de publication de la demande: 12.01.2011
(73) Titulaire: Boulais, Guillaume, 92300 Levallois Perret (FR)
(72) Inventeur: Boulais, Guillaume, 92300 Levallois Perret (FR)
(74) Mandataire: Pontet Allano & Associes
(86) Numéro de dépôt international: PCT/FR2009/050476
(87) Numéro de publication internationale: WO 2009/125104

(56) Documents cités:
- EP-A- 0 464 394
- WO-A-2007/149362
- WO-A-2008/029540
- JP-A- 9 304 623
- US-A- 5 708 428
- US-A1- 2003 053 307
- US-A1- 2004 223 328
- US-A1- 2006 164 840
- US-A1- 2007 086 179
- US-A1- 2007 102 718

## Description

### Domaine technique

La présente invention concerne un procédé pour fabriquer un module d'éclairage. En particulier, elle concerne un module de rétro-éclairage.

Un tel module peut permettre de créer un éclairage d'ambiance par exemple dans une pièce ou sous la forme d'un plafonnier d'une automobile. Un domaine d'application de l'invention peut par exemple être plus particulièrement celui de l'éclairage du contenu d'étagères ou de meubles, ou de l'éclairage d'une pièce en substitution d'un ensemble de tubes néons.

Un tel module peut aussi permettre de rétro-éclairer des objets variés, par exemple une petite étiquette dans un rayon d'un super marché ou une grande affiche publicitaire dans une rue. Un domaine d'application de l'invention peut par exemple être plus particulièrement celui du rétro-éclairage d'enseignes commerciales, d'affiches publicitaires ou de panneaux de signalisation, ou encore celui du rétro éclairage (« backlight ») d'écrans LCD en particuliers d'écrans de grandes dimensions.

### Etat de la technique antérieure

On connaît par exemple les documents US 7,226,182 et US 2007/0274103 qui décrivent des modules de rétro-éclairage, comprenant typiquement :
- un panneau guide de lumière, comprenant deux faces planes opposées reliés par des bords latéraux.
- une source d'émission de lumière disposée à côté d'un des bords latéraux du panneau, et agencée pour émettre de la lumière vers le panneau,
- des moyens disposés à côté d'une des faces planes du panneau et agencés pour réfléchir vers l'autre face plane de la lumière provenant de la source d'émission, l'objet à rétro-éclairer ce trouvant du côté de cette autre face plane,

Plus la taille de l'objet à rétro-éclairer est grande, plus la taille du module est grande, et plus la puissance de la source d'émission augmente. Le module est alors couteux à fabriquer et à alimenter en énergie électrique. Typiquement, ce genre de module est plutôt utilisé pour des objets de petite taille par exemple pour le rétro-éclairage d'un écran de téléphone portable.

Le document US 5,708,428 décrit une insertion de sources d'émission dans un guide de lumière comprenant un matériau initialement liquide ou pâteux puis une solidification du matériau du guide après insertion des sources dans le guide.

Le but de la présente invention est de proposer un module d'éclairage économique (en termes de fabrication, de consommation et/ou de maintenance) et pouvant s'adapter à des objets de grande taille.

### Exposé de l'invention

Cet objectif est atteint avec un module d'éclairage comprenant :
- une pluralité de sources d'émission de lumière,
- un guide de lumière comprenant une face de transmission agencée pour transmettre vers un objet à éclairer de la lumière émise par les sources d'émission et une face de renvoi faisant face à la face de transmission , et
- des moyens pour renvoyer vers l'intérieur du guide de la lumière émise par les sources d'émission et reçue par la face de renvoi,
caractérisé en ce que les sources d'émission sont situées à l'intérieur du guide de lumière entre la face de transmission et la face de renvoi, et sont agencées pour émettre de la lumière dans une direction d'émission sensiblement parallèle à la face de renvoi.

Dans ce document, on entend par direction d'émission de lumière la direction portée par l'axe central d'un angle solide dans lequel cette lumière est émise.

Ainsi, selon une particularité de l'invention, les sources d'émission n'éclairent de préférence pas directement en direction de la face de transmission, mais plutôt parallèlement à la face de renvoi et/ou de transmission, de manière à mieux répartir la lumière dans le panneau guide de lumière.

En répartissant une pluralité de sources d'émission dans le panneau guide de lumière, la taille du panneau peut être très grande malgré le fait que chaque source d'émission soit peu puissante, de fabrication courante et peu chère.

De préférence, les sources d'émission sont insérées dans le guide de lumière par le côté de la face de renvoi.

Pour pouvoir insérer les sources d'émission à l'intérieur du guide, le guide est de préférence constitué d'un matériau initialement liquide ou pâteux lors de la fabrication du module, ledit matériau étant solidifié (par refroidissement, par thermofusion, par polymérisation, par réticulation ou autre) après insertion des sources d'émissions dans le guide. On peut par exemple enrober avec le matériau liquide ou pâteux les sources d'émission portées par des circuits imprimés. Le matériau pâteux peut par exemple consister en :
- de l'Ethylène Vinyl Acétate (EVA) chauffé à et réticulant à 145°C et pressé sous vide contre la face des circuits imprimés qui porte les sources d'émission, ou
- un autre matériau plus transparent et nécessitant une température moins élevée comme des feuilles de silicone chauffées à 110°C cette fois sans réticulation,
- on peut aussi envisager d'autres matériaux comme une résine UV par exemple.

Ainsi, les sources d'émission sont de préférence situées dans le guide sans espace intermédiaire entre le guide et les sources d'émission, en particulier sans espace d'air.

Le guide de lumière peut typiquement comprendre en outre au moins une surface de pourtour reliant la face de transmission à la face de renvoi, les sources d'émission étant entourées par l'au moins une surface de pourtour.

Les sources d'émission sont de préférence des Diodes Electro Luminescentes de type « side view ».

Les sources d'émission sont de préférence regroupées selon au moins une rangée de sources d'émission, chaque rangée comprenant des sources d'émission sensiblement alignées selon une direction d'alignement, et agencées pour émettre de la lumière selon une direction principale d'émission sensiblement perpendiculaire à la direction d'alignement.

La pluralité de sources d'émission peut être portée par au moins un circuit imprimé plaqué ou collé contre la face de renvoi. Ainsi, chaque circuit imprimé est de préférence situé du côté de la face de renvoi par rapport au guide de lumière, est sensiblement parallèlement à la face de renvoi, et est de préférence plaqué contre la face de renvoi. L'au moins un circuit imprimé peut comprendre des résistances électriques reliées électriquement aux sources d'émission, lesdites résistances pouvant être enterrées dans l'au moins un circuit imprimé de manière à ne pas dépasser de la surface de l'au moins un circuit imprimé orientée vers le guide.

Les sources d'émission d'une rangée peuvent être portées par plusieurs circuits imprimés reliés électriquement entre eux pour l'alimentation de ces sources d'émission ou peuvent être portées par un unique circuit imprimé. Au moins un circuit imprimé d'une rangée donnée peut comprendre au moins une source d'émission supplémentaire sensiblement alignée avec les sources d'émission de cette rangée donnée, chaque source supplémentaire étant agencée pour émettre de la lumière selon une direction correspondant à la direction principale déviée vers un circuit imprimé voisin.

Le module selon l'invention peut comprendre plusieurs rangées parallèles de sources d'émission, reliées électriquement entre elles pour l'alimentation des sources d'émission. Au moins un circuit imprimé peut porter :
- un premier alignement de sources d'émission agencées pour émettre de la lumière selon une première direction principale d'émission, et
- un deuxième alignement de sources d'émission parallèle au premier alignement et dont les sources d'émission sont agencées pour émettre de la lumière selon une deuxième direction principale d'émission, la première direction d'émission étant sensiblement opposée à la deuxième direction d'émission.

De manière préférentielle, le premier alignement et le deuxième alignement se font face.

Les moyens de renvoi peuvent comprendre une couche réfléchissante agencée pour réfléchir vers l'intérieur du guide de la lumière émise par les sources d'émission et reçue par face de renvoi. La couche réfléchissante peut être située directement en contact de tout ou partie de la face de renvoi, et en particulier peut être située entre l'au moins un circuit imprimé et la face de renvoi.

Dans ce document, on distingue les sources d'émission qui créent de la lumière (par exemple à partir d'un signal électrique) et les sources de diffusion qui diffusent ou rétrodiffusent de la lumière déjà existante qu'elles ont captée.

Ainsi, les moyens de renvoi peuvent comprendre des sources de diffusion de lumière situées du côté de la face de renvoi par rapport au guide de lumière, et agencées pour capter la lumière émise par les sources d'émission et reçue par la face de renvoi puis pour rediffuser vers le guide la lumière captée. Les sources de diffusion situées du côté de la face de renvoi comprennent de préférence des structures en creux et/ou en bosses réparties sur la face de renvoi. La face de renvoi peut être dépolie.

Le module selon l'invention peut comprendre en outre des sources de diffusion de lumière situées du côté de la face de transmission par rapport au guide de lumière, et agencées pour capter la lumière émise par les sources d'émission et reçue par la face de transmission puis pour rediffuser vers l'objet à éclairer la lumière captée. Les sources de diffusion situées du côté de la face de transmission comprennent de préférence des structures en creux et/ou en bosses réparties sur la face de transmission. La face de transmission peut être dépolie.

Ainsi, en combinant une émission de lumière dans une direction parallèle à la face de renvoi et/ou de transmission avec des sources de diffusion réalisées sur la face de renvoi et/ou de transmission ou de diffusion, on obtient en sortie du guide une lumière bien homogène.

Ainsi, les sources de diffusion qui peuvent être réalisées sur la face de renvoi et/ou de transmission comprennent de préférence des structures en creux et/ou en bosses réparties respectivement sur la face de renvoi et/ou de transmission. Ces structures sont de préférence des microstructures. Ces structures permettent de préférence de réfracter la lumière, d'avoir suffisamment de lumière dirigée vers la face de transmission. La densité des structures peut être différente pour répartir uniformément la lumière vers la face de transmission : lorsque l'angle d'incidence sur la face de renvoi est supérieur à un angle limite (dépendant de l'indice de réfraction des matériaux utilisés et donc des milieux et matériaux) la réflexion est totale (plus de perte par transmission) et c'est ce que l'on cherche de préférence dans le guide de lumière afin de réduire les pertes. La lumière qui sort du guide du côté de la face de renvoi est de préférence récupérée grâce à un réflecteur (par exemple Blanc ou métallique ...) mais cette fois la perte d'énergie est plus importante. On connaît différentes technologies comme les technologies V-CUT, lentilles, Etching (Traitement chimique) ou prismes pour réaliser ces structures, et on peut éventuellement mixer les différentes formes et on peut placer ces structures côté de la face de renvoi et/ou côté de la face de transmission. Les structures peuvent avoir des tailles faibles de l'ordre du micron ou de quelques dizaines de microns par exemple.

Le module selon l'invention peut en outre comprendre, du côté de la face de transmission par rapport au guide de lumière, un film de transmission dont le coefficient de transmission de la lumière est inhomogène de manière à compenser une inhomogénéité de lumière émergeant de la face de transmission due à une inhomogénéité de répartition des sources d'émission dans le guide de lumière. Le film de transmission peut être une couche imprimée par exemple par jet d'encre, par sérigraphie, par flexographie, ou autre, en particulier imprimée sur une couche servant de diffuseur. De manière préférentielle, pour au moins une des sources d'émission, le coefficient de transmission du film de transmission augmente lorsque l'on s'éloigne de cette source d'émission selon la direction d'émission de cette source d'émission. Le film de transmission peut en outre être agencé pour compenser une inhomogénéité de lumière émergeant de la face de transmission due à une courbure du guide de lumière. Le film de transmission peut par exemple comprendre des minimums locaux du coefficient de transmission de la lumière au niveau d'au moins une intersection entre deux directions d'émission d'au moins deux sources d'émission.

Le module selon l'invention est de préférence flexible de sorte qu'il puisse être enroulé sur lui-même sous la forme d'un rouleau, ou puisse être plaqué contre un objet à rétro-éclairer en épousant le plus possible la forme de cet objet, c'est-à-dire avec le moins d'espace possible entre le module et cet objet.

Dans ce document, on dit que le module selon l'invention ou qu'un de ses composants est flexible si sa forme est susceptible de s'adapter, par exemple s'il peut épouser de nombreuses formes en fonction de la forme de l'objet contre lequel il est plaqué.

Le module selon l'invention peut en outre comprendre des moyens d'accès périodique à des moyens reliant électriquement les sources d'émission pour l'alimentation électrique des sources d'émission. En particulier, si le module comprend plusieurs bandes de circuit imprimé portant les sources d'émission et régulièrement espacées, chacune de ces bandes peut être munie de moyens de connexion électrique accessibles de l'extérieur du module selon l'invention.

Les sources d'émission sont de préférence situées dans le guide sans espace intermédiaire entre le guide et les sources d'émission, en particulier de préférence sans espace d'air.

Le guide peut comprendre un matériau initialement liquide ou pâteux et solidifié après insertion des sources d'émission dans le guide.

Les sources d'émission sont de préférence portées par au moins un circuit imprimé.

Le guide comprend de préférence des bords latéraux reliant la face de transmission et la face de renvoi, au moins une rangée de sources d'émission étant de préférence située à l'intérieur du guide de lumière entre la face de transmission et la face de renvoi en dehors des bords latéraux du guide.

Le module selon l'invention peut comprendre en outre du côté de la face de renvoi ou de la face de transmission du guide :
- une couche d'air qui est en contact respectivement avec la face de renvoi ou la face de transmission du guide, ou
- une couche qui possède un indice de réfraction inférieur à un indice de réfraction du guide et qui est en contact respectivement avec la face de renvoi ou la face de transmission du guide.

Dans ce document, on entend par indice de réfraction inférieur à celui du guide un indice de réfraction de préférence inférieure d'une valeur d'au moins 0,1 ou 0,2.

Le module selon l'invention peut comprendre une bande le long de laquelle est formé un creux longiforme, la bande portant au moins un alignement de sources d'émission situées à l'intérieur du creux longiforme et alignées le long du creux longiforme, le creux étant rempli de matière faisant partie du guide de lumière. Bien entendu, dans ce document, quand on dit qu'un module comprend une bande, on entend que le module comprend au moins une bande. De même, dans ce document, quand on dit qu'un creux est formé le long d'une bande, on entend qu'au moins un creux est formé le long de cette bande, une bande pouvant comprendre plusieurs creux longiformes parallèles ou non. La bande peut porter deux alignements de sources d'émission à l'intérieur du creux longiforme, chaque alignement étant agencé pour émettre de la lumière dans une direction différente. Chaque source portée à l'intérieur du creux longiforme est de préférence agencée pour émettre de la lumière dans une direction d'émission sensiblement parallèle à une portion du creux de la bande portant cette source. La bande est de préférence située du côté de la face de renvoi du guide. La bande peut comprendre des moyens pour renvoyer vers l'intérieur du guide de la lumière émise par les sources d'émission et reçue par la face de renvoi. A chacune des extrémités de la bande, la bande peut porter à l'intérieur du creux des sources d'émissions qui éclairent en direction de l'extérieur du creux, sensiblement perpendiculairement à la direction d'émission de l'au moins un alignement de sources porté par cette bande.

Le module selon l'invention peut comprendre, sur le guide de lumière du côté de la face de transmission, un masque situé au dessus de sources d'émission pour masquer la lumière près de ces sources d'émission, le masque comprenant de préférence :
- éventuellement une impression situé sur la face de transmission de gel UV et ayant de préférence un indice plus faible que celui du guide, puis
- une impression de couleur sombre par-dessus le gel UV de faible indice ou sur la face de transmission en cas d'absence d'impression de gel UV, puis
- un revêtement (« coating ») par-dessus l'impression couleur, avec des billes et/ou de la résine diffuseur et/ou un motif diffuseur (Demi-sphères).

Selon un autre aspect de l'invention, il est proposé un procédé de fabrication d'un module d'éclairage caractérisé en ce que :
- on insert des sources d'émission dans un guide de lumière comprenant un matériau initialement liquide ou pâteux, le guide de lumière comprenant une face de transmission agencée pour transmettre vers un objet à éclairer de la lumière émise par les sources d'émission et une face de renvoi faisant face à la face de transmission, les sources d'émission étant insérées de sorte qu'elles sont situées à l'intérieur du guide de lumière entre la face de transmission et la face de renvoi
- on solidifie le matériau du guide après insertion des sources dans le guide.

L'insertion peut comprendre un enrobage des sources d'émission avec le matériau liquide ou pâteux.

Les sources sont de préférence insérées de sorte que les sources sont situées dans le guide sans espace intermédiaire entre le guide et les sources d'émission, en particulier sans espace d'air.

De préférence, on insert les sources d'émission entre la face de transmission et la face de renvoi de sorte que les sources sont agencées pour émettre de la lumière dans une direction d'émission sensiblement parallèle à la face de renvoi.

Lors de l'insertion des sources dans le guide, les sources sont de préférence portées par au moins un circuit imprimé.

Le guide peut comprendre des bords latéraux reliant la face de transmission et la face de renvoi, et on peut insérer au moins une rangée de sources en dehors des bords latéraux du guide.

Dans le procédé selon l'invention, on peut réaliser directement sur le guide de lumière, du côté de la face de transmission et au dessus de sources d'émission, un masque pour masquer la lumière près de ces sources d'émission, en réalisant de préférence :
- éventuellement une première impression de gel UV sur la face de transmission et ayant de préférence un indice plus faible que celui du guide, puis
- une impression de couleur sombre par-dessus le gel UV de faible indice ou sur la face de transmission en cas d'absence d'impression de gel UV, puis
- un revêtement (« coating ») par-dessus l'impression couleur, avec des billes et/ou de la résine diffuseur et/ou un motif diffuseur (Demi-sphères).

Dans une première variante, l'insertion peut comprendre un moulage d'au moins une partie du guide sur un substrat sur lequel les sources d'émission sont disposées. Ce substrat peut servir de support au guide qui est liquide ou pâteux pendant la fabrication pour intégrer les sources, et il peut aussi servir de support aux sources. Par exemple dans un premier mode de fabrication, les sources sont disposées sur le substrat puis on dépose par coulée une résine acrylique ou époxy sur l'ensemble. Dans un second mode de fabrication, on dispose les sources sur le substrat puis on couvre les sources et le substrat avec un film SILICONE solide qui devient liquide pour la fabrication du guide en le faisant fondre sous pression ou sous vide. Enfin dans un troisième mode de fabrication, on vient extruder le guide pâteux que l'on vient déposer encore pâteux sur le substrat muni des sources d'émission (« Cast Film »).

Une face de moulage du guide parmi les faces de transmission ou de renvoi peut être en contact avec le substrat lors du moulage, le substrat comprenant des structures en creux et/ou bosses réparties sur sa surface qui est en contact avec la partie moulée du guide lors du moulage de sorte que le guide comprenne respectivement des bosses et/ou creux réparties sur la face de moulage.

On peut compléter la partie moulée du guide en ajoutant du côté de la face de renvoi ou de la face de transmission du guide :
- une couche d'air qui est en contact respectivement avec la face de renvoi ou la face de transmission du guide, ou
- une couche qui possède un indice de réfraction inférieur à un indice de réfraction du guide et qui est en contact respectivement avec la face de renvoi ou la face de transmission du guide,
- et/ou une couche qui possède un indice de réfraction sensiblement égal à un indice de réfraction de la partie moulée du guide, qui complète la partie moulée du guide, qui fait partie du guide et qui comprend une répartition de structures en creux et/ou bosses.

Le substrat peut ne pas faire partie du module, et on démoule la partie moulée du guide.

Sinon, le substrat peut faire partie du module, la partie moulée du guide n'étant pas démoulé du substrat. Le substrat peut comprendre :
- des moyens pour renvoyer vers l'intérieur du guide de la lumière émise par les sources d'émission et reçue par la face de renvoi ou des moyens pour diffuser vers l'extérieur du guide de la lumière émise par les sources d'émission et reçue par la face de transmission, et/ou
- une couche qui est en contact avec la face de transmission ou de renvoi du guide et qui possède un indice de réfraction inférieur à un indice de réfraction du guide. Cette couche en contact avec le guide et d'indice inférieur comprend avantageusement des structures (de préférence des microstructures) en creux et/ou en bosses réparties sur sa surface qui est en contact avec la partie moulée du guide lors du moulage de sorte que le guide comprenne respectivement des bosses et/ou creux réparties sur la face de moulage. Cette couche peut être réalisée par le dépôt de « GEL UV » (ou de tout autre résine) sur lequel une pression mécanique est appliquée, par exemple au moyen d'un rouleau venant former les structures sur la surface de cette couche ou au moyen d'une plaque mise en pression sur le gel ,le rouleau ou la plaque contenant les formes complémentaires en bosses et/ou creux. Il existe de nombreux gel UV utilisables pour cette couche, en général à base ACRYLATE ou METHACRYLATE comme des EPOXY ACRYLATE, EPOXY METHHACRYLATE, URETHANE ACRYLATE, URETHANE METHACRYLATE, ACRYLATE, ayant en général un indice proche de 1,5 ou plus élevé jusqu'à 1,6 ou 1,7 avec des formulations spéciales. Pour diminuer l'indice de réfraction de cette couche on peut y adjoindre des molécules supplémentaires comme des composés fluorés et on peut avoir des indices autour de 1,3. D'autres moyens de réticulation existent en fonction des matériaux utilisés (Chaleur, rayons gamma, mélange ...). Les résines se solidifient grâce à l'assemblage de liaisons chimiques et le processus n'est pas réversible contrairement aux thermoplastiques qui peuvent être refondues comme certains silicones ; et/ou
- une couche qui est en contact avec la partie moulée du guide, qui possède un indice de réfraction de préférence sensiblement égal à un indice de réfraction de la partie moulée du guide, qui complète la partie moulée du guide et qui fait partie du guide. Cette couche d'indice préférentiellement égal peut comprendre des structures en creux et/ou bosses réparties sur une première surface opposée à une deuxième surface qui est en contact avec la partie moulée du guide. Ces structures peuvent être réalisées directement par moulage, compression de la matière à chaud, elles peuvent aussi être réalisées par le revêtement (« coating ») d'un gel UV sur un film ou une plaque lisse. On peut mettre la première face de la couche d'indice préférentiellement égal en contact avec une couche d'air ou avec une couche qui possède un indice de réfraction inférieur à un indice de réfraction du guide.

Dans une deuxième variante, l'insertion des sources dans le guide peut comprendre les étapes suivantes :
- une fourniture d'une bande le long de laquelle est formé un creux longiforme, la bande portant au moins un alignement de sources d'émission à l'intérieur du creux longiforme et alignées le long du creux longiforme,
- une application du côté creux de la bande sur une première partie du guide de lumière,
- un remplissage du creux avec la matière liquide ou pâteuse de manière à former une deuxième partie du guide de lumière en contact avec la première partie du guide de lumière.

La bande peut être une partie d'une plaque comprenant cette bande, le creux de cette bande pouvant être formé par déformation de la plaque.

Avant le remplissage, la première partie du guide de lumière peut être solide, la deuxième partie du guide de lumière étant solidifiée après le remplissage.

La bande peut comprendre un trou de remplissage à travers lequel on remplit le creux avec la matière liquide ou pâteuse. De façon avantageuse, le trou est de préférence placé sur le côté de la bande ou vers une de ses extrémités sur un bouchon.

La bande peut porter deux alignements de sources d'émission à l'intérieur du creux longiforme, chaque alignement étant agencé pour émettre de la lumière dans une direction différente

Chaque source portée à l'intérieur du creux longiforme peut être agencée pour émettre de la lumière dans une direction d'émission sensiblement parallèle à une portion du creux de la bande portant cette source.

La bande peut être appliquée du côté de la face de renvoi du guide, et peut comprendre des moyens pour renvoyer vers l'intérieur du guide de la lumière émise par les sources d'émission et reçue par la face de renvoi.

A chacune des extrémités de la bande, la bande peut porter à l'intérieur du creux des sources d'émissions qui éclairent en direction de l'extérieur du creux, sensiblement perpendiculairement à la direction d'émission de l'au moins un alignement de sources porté par cette bande.

Selon un autre aspect de l'invention, l'invention concerne un module d'éclairage obtenu par le procédé de fabrication selon l'invention.

Selon un autre aspect de l'invention, il est proposé une bande pour la fabrication d'un module d'éclairage selon l'invention, caractérisé en ce que un creux longiforme est formé le long de cette bande, la bande portant au moins un alignement de sources d'émission à l'intérieur du creux longiforme et aligné le long du creux longiforme.

La bande selon l'invention peut comprendre un trou de remplissage pour remplir le creux avec de la matière liquide ou pâteuse alors que la bande est appliquée sur une première partie d'un guide de lumière du côté creux de la bande. De façon avantageuse, le trou est de préférence placé sur le côté de la bande ou vers une de ses extrémités sur un bouchon.

La bande selon l'invention peut porter deux alignements de sources d'émission à l'intérieur du creux longiforme, chaque alignement étant agencé pour émettre de la lumière dans une direction différente

Chaque source portée à l'intérieur du creux longiforme est de préférence agencée pour émettre de la lumière dans une direction d'émission sensiblement parallèle à la portion du creux de la bande portant cette source.

La bande selon l'invention peut comprendre des moyens pour réfléchir de la lumière émise par les sources d'émission.

A chacune des extrémités de la bande, la bande peut porter à l'intérieur du creux des sources d'émissions qui éclairent en direction de l'extérieur du creux, sensiblement perpendiculairement à la direction d'émission de l'au moins un alignement de sources porté par cette bande.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 est une vue schématique de dessus d'un premier mode de réalisation de module selon l'invention,
- la figure 2 est une vue schématique de dessus d'un deuxième mode de réalisation de module selon l'invention,
- la figure 3 est une vue schématique de dessus d'un troisième mode de réalisation de module selon l'invention
- la figure 4 est une vue schématique de profil et en coupe, selon l'axe 26 de la figure 3, du troisième mode de réalisation de module selon l'invention mis à plat,
- la figure 5 est une vue schématique de dessus d'un quatrième mode de réalisation de module selon l'invention, qui est un mode de réalisation préféré de l'invention,
- la figure 6 est une vue schématique de profil et en coupe, selon l'axe 27 de la figure 5, d'une variante du quatrième mode de réalisation de module selon l'invention mis à plat,
- la figure 7 est une vue schématique de profil et en coupe, selon l'axe 27 de la figure 5, du quatrième mode de réalisation de module selon l'invention en position courbée,
- la figure 8 est une vue schématique de dessus d'un cinquième mode de réalisation de module selon l'invention,
- la figure 9 est une vue schématique de profil et en coupe, selon l'axe 28 de la figure 8, du cinquième mode de réalisation de module selon l'invention mis à plat,
- la figure 10 est une vue schématique de profil et en coupe d'un sixième mode de réalisation de module selon l'invention,
- la figure 11 est une vue schématique de profil et en coupe d'un septième mode de réalisation de module selon l'invention,
- la figure 12 est une vue schématique de profil et en coupe d'un huitième mode de réalisation de module selon l'invention,
- la figure 13 est une vue schématique de profil et en coupe d'un neuvième mode de réalisation de module selon l'invention,
- la figure 14 est une vue schématique de profil et en coupe d'un dixième mode de réalisation de module selon l'invention,
- la figure 15 est une vue schématique de profil et en coupe d'un onzième mode de réalisation de module selon l'invention,
- la figure 16 est une vue schématique de profil et en coupe d'un douzième mode de réalisation de module selon l'invention,
- la figure 17 est une vue schématique de profil et en coupe d'un treizième mode de réalisation de module selon l'invention,
- la figure 18 est une vue schématique en perspective du treizième mode de réalisation de module selon l'invention,
- la figure 19 est une vue schématique de profil et en coupe d'un quatorzième mode de réalisation de module selon l'invention,
- la figure 20 est une vue schématique en perspective du quatorzième mode de réalisation de module selon l'invention,
- la figure 21 est une vue schématique de profil et en coupe d'un quinzième mode de réalisation de module selon l'invention, et
- la figure 22 est une vue schématique de profil et en coupe d'un seizième mode de réalisation de module selon l'invention.

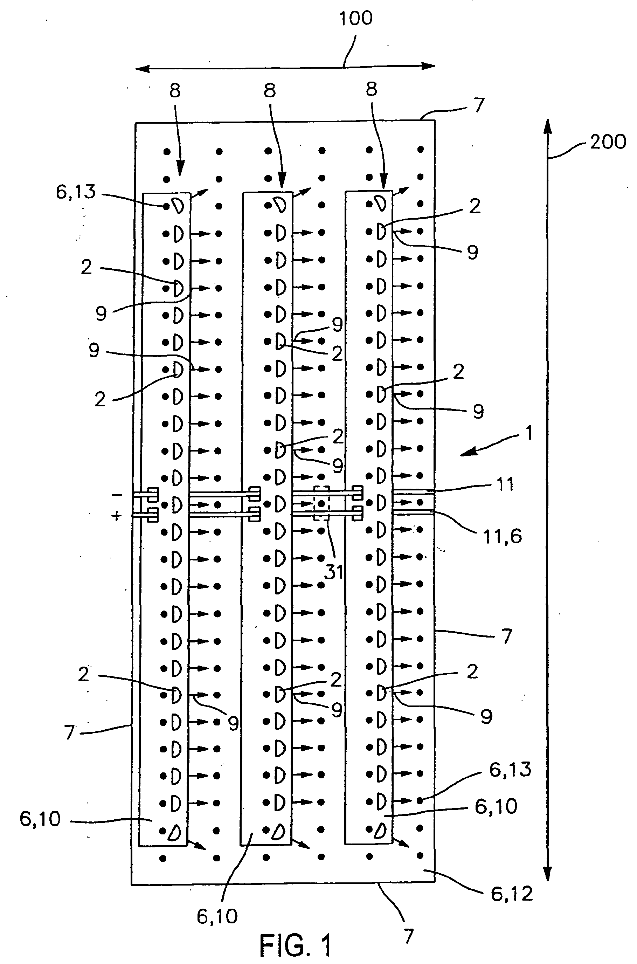

On va tout d'abord décrire, en référence aux figures 1 à 7 et 10 à 22 des caractéristiques communes aux 4 premiers modes de réalisation de module d'éclairage 1 selon l'invention et du sixième jusqu'au seizième mode de réalisation de module d'éclairage 1 selon l'invention.

Le module 1 comprend :
- une pluralité de sources d'émission de lumière 2 (et éventuellement 19), et
- une plaque guide de lumière 3, réalisé en un matériau transparent c'est-à-dire n'absorbant sensiblement pas la lumière émise par les sources d'émission 2, 19 de manière à guider cette lumière hors du guide 3.

Le guide 3 a sensiblement une forme de plaque comprenant deux faces opposées bordant le guide : une face de transmission 4 sensiblement plane et une face de renvoi 5 sensiblement plane. Cette plaque est flexible, et peut être mis à plat ou prendre des formes courbes. Ces deux faces sont sensiblement de mêmes dimensions, et définissent la longueur 100 et la largeur 200 du guide 3 et donc du module 1. La face de transmission 4 est agencée pour laisser passer et transmettre hors du guide 3 vers un objet à éclairer de la lumière émise par les sources d'émission 2, 19 à l'intérieur du guide 3. L'objet à éclairer est situé hors du guide 3, du côté de la face de transmission 4 par rapport au guide 3. Cet objet est de préférence rétro-éclairé, c'est-à-dire qu'il est situé entre l'observateur et le guide 3. La face de renvoi 5 fait face à la face de transmission 4. La face de renvoi 5 est sensiblement parallèle à la face de transmission 4, sauf au niveau de bandes 38 comprises dans certains des modes de réalisation décrits par la suite. Sur les figures en coupe 4, 6 et 7, 10 à 17, 19, 21 et 22 la face de transmission 4 correspond à la ligne continue bordant le côté supérieur du guide 3, et la face de renvoi 5 correspond à la ligne continue bordant le côté inférieur du guide 3.

Chacune des sources d'émission 2, 19 est agencée pour émettre de la lumière dans une direction d'émission 9 (ou éventuellement 20, 21, ou 29) sensiblement parallèle à la face de renvoi 5.

Le module 1 comprend en outre des moyens de renvoi 6, agencés pour renvoyer vers l'intérieur du guide 3 de la lumière émise par les sources d'émission 2, 19 à l'intérieur du guide 3 et reçue par la face de renvoi 5.

Les figures 1, 2, 3, et 5 illustre le module 1 mis à plat et vu de dessus selon un plan sensiblement parallèle aux faces de transmission 4 et de renvoi 5, au guide 3 et aux autres films et couches superposées au guide 3 ; il n'est donc pas possible de faire la distinction entre ces différents éléments sur ces figures.

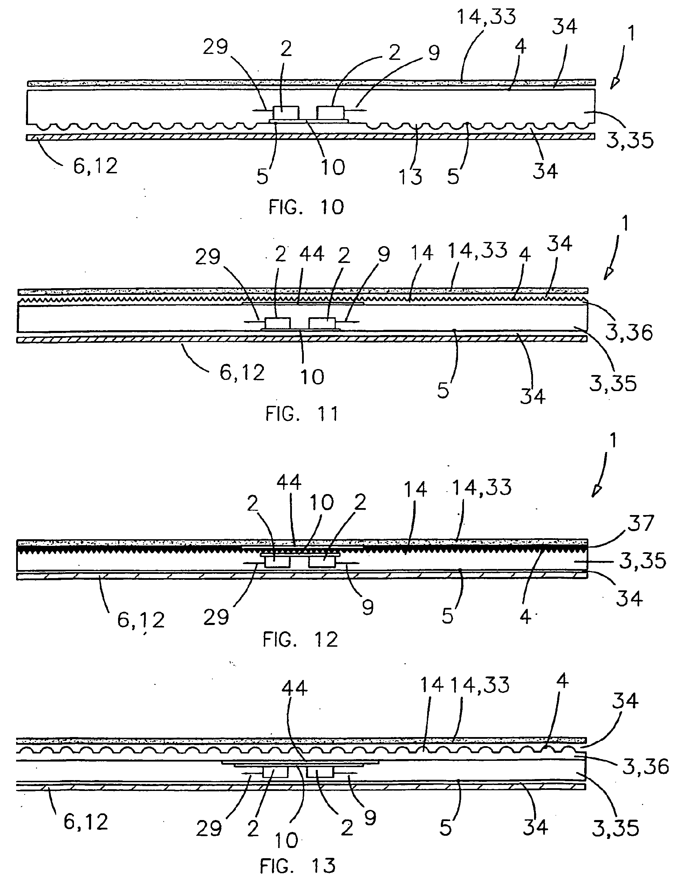

Chacune des sources d'émission 2, 19 est schématisée sur les figures 1 à 7 avec une forme en D et sur les figures 10 à 22 avec une forme carrée. Pour ne pas surcharger les figures, toutes les sources d'émission ne sont pas référencées. Les sources d'émission 2, 19 sont situées à l'intérieur du guide 3 : ces sources d'émission 2, 19 sont insérées à l'intérieur du guide 3 à partir de la face de renvoi 5, sauf pour les huitième et neuvième modes de réalisation décrits en référence aux figures 12 et 13 et pour lesquels ces sources d'émission 2, 19 sont insérées à l'intérieur du guide 3 à partir de la face de transmission. Le guide 3 comprend en outre une surface de pourtour 7 (aussi appelée bords latéraux) reliant la face de transmission 4 à la face de renvoi 5, de sorte que les sources d'émission 2, 19 sont entourées par la surface de pourtour 7. La distance reliant les faces 4 et 5 le long de la surface de pourtour 7 est l'épaisseur du guide 3. Une épaisseur d'un des composants du module 1 est de manière générale définie perpendiculairement à la face de renvoi 5 ou de transmission 4.

Des sources d'émission 2 forment plusieurs rangées parallèles 8 de sources d'émission 2. Au moins une rangée 8 de sources d'émission est située à l'intérieur du guide de lumière 3 entre la face de transmission 4 et la face de renvoi 5 en dehors des bords latéraux 7 du guide. Les figures 10 à 22 ne représentent qu'une portion du module 1 sur laquelle on ne distingue de profil au minimum que deux des rangées 8 de sources d'émission 2, c'est pourquoi les bords latéraux 7 ne sont pas référencés sur ces figures.

Chaque rangée 8 comprend des sources d'émission 2 sensiblement alignées selon une direction d'alignement (correspondant à une direction verticale sur les vues de dessus des figures 1, 2, 3, 5) et agencées pour émettre de la lumière selon une direction principale d'émission 9 (ou éventuellement 29) schématisée par une flèche et sensiblement perpendiculaire à la direction d'alignement. Une largeur d'un des composants du module 1 est de manière générale définie selon la direction d'alignement des sources d'émission 2. Une longueur d'un des composants du module 1 est de manière générale définie perpendiculairement à sa largeur et à son épaisseur.

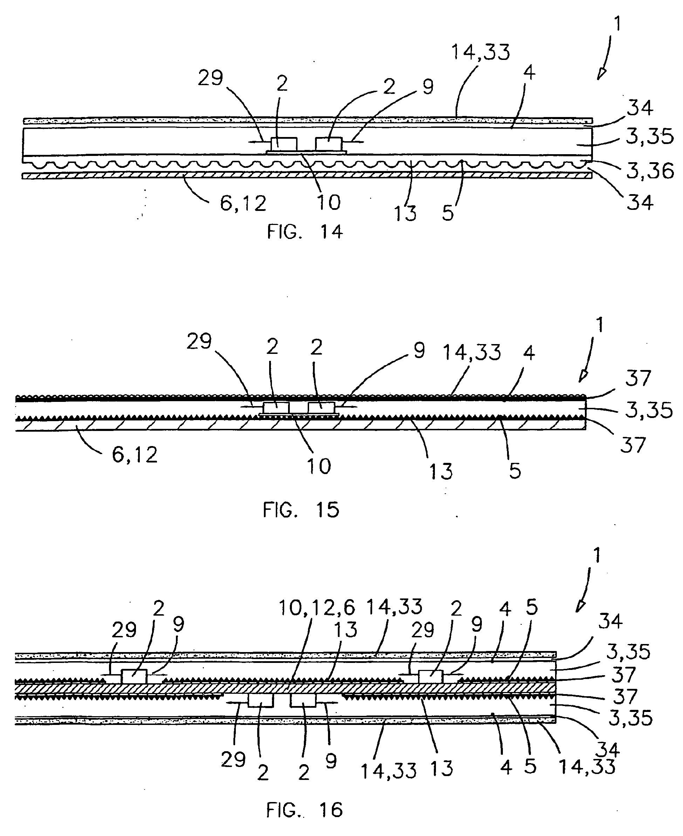

Les sources d'émission 2, 19 sont réparties sur une pluralité de circuits imprimés 10. Les faces des circuits imprimés 10 portants les sources d'émission sont plaquées contre la face de renvoi 5 de sorte que l'ensemble des circuits imprimés 10 couvre uniquement une partie de la face de renvoi 5, sauf pour le huitième mode de réalisation décrit en référence à la figure 12 et pour lequel les faces des circuits imprimés 10 portants les sources d'émission sont plaquées contre la face de transmission 4 de sorte que l'ensemble des circuits imprimés 10 couvre uniquement une partie de la face de transmission 4, et sauf pour les neuvième et dixième modes de réalisation décrits en référence aux figures 13 et 14 et pour lesquels les faces des circuits imprimés 10 portants les sources d'émission sont enrobés à l'intérieur du guide entre la face de transmission 4 et la face de renvoi 5. Toutes les rangées 8 sont reliées électriquement entre elles par des fils électriques plats 11 (comprenant typiquement un fil pour une borne positive et un autre fil pour une borne négative) qui sont agencés pour alimenter électriquement les sources d'émission, et sont plaqués contre la face de renvoi 5. La partie de la face de renvoi 5 non recouverte par les circuits imprimés 10 ou les fils 11 est recouverte par une couche réfléchissante 12 qui réfléchit vers l'intérieur du guide 3 de la lumière émise par les sources d'émission et reçue par la face de renvoi 5 puis par la couche 12, sauf pour les huitième et neuvième modes de réalisation décrits en référence aux figures 12 et 13 pour lesquels les sources d'émission sont insérées à l'intérieur du guide 3 à partir de la face de transmission et pour lesquels toute la face de renvoi 5 est recouverte par une couche réfléchissante 12 qui réfléchit vers l'intérieur du guide 3 de la lumière émise par les sources d'émission et reçue par la face de renvoi 5 puis par la couche 12.

Chacune des sources d'émission est une Diode Electro Luminescente (DEL) du type « side view », c'est à dire qu'une source d'émission considérée est agencée pour émettre de la lumière dans une direction d'émission 9 (ou éventuellement 29) sensiblement parallèle à la portion du circuit imprimé 10 portant ladite source d'émission. Dans le cas des modes de réalisation décrits en référence aux figures 1 à 7, 10, 11 et 15 à 22, les circuits imprimés 10 sont plaqués contre la face de renvoi 5, chacune des sources d'émission est donc agencée pour émettre de la lumière dans une direction d'émission sensiblement parallèle à la portion de la face de renvoi 5 par laquelle ladite source d'émission 2,19 est insérée dans le guide 3. De manière générale, pour tous les modes de réalisation décrits, chacune des sources d'émission est donc agencée pour émettre de la lumière dans une direction d'émission sensiblement parallèle à la portion de la face de renvoi 5 au niveau de laquelle cette source est située, c'est-à-dire dans une direction d'émission sensiblement parallèle à la portion de la face de renvoi 5 la plus proche de cette source.

En plus de la couche réfléchissante 12, les moyens de renvoi 6 comprennent :
- la surface des circuits imprimés 10 orientée vers la face de renvoi 5, cette surface étant traitée pour réfléchir vers l'intérieur du guide 3 de la lumière émise par les sources d'émission et reçue par la face de renvoi 5 puis par les circuits 10,
- la surface des fils 11 orientée vers la face de renvoi 5, cette surface étant traitée pour réfléchir vers l'intérieur du guide 3 de la lumière émise par les sources d'émission et reçue par la face de renvoi 5 puis par les fils 11.
sauf pour le huitième mode de réalisation décrit en référence à la figure 12 et pour lequel les circuits imprimés 10 sont plaqués contre la face de transmission 4, et sauf pour les neuvième et dixième modes de réalisation décrits en référence aux figures 13 et 14 et pour lesquels les circuits imprimés 10 sont enrobés à l'intérieur du guide entre la face de transmission 4 et la face de renvoi 5. Comme traitement de la surface des circuits imprimés 10 et/ou des fils 11, de la peinture ou encre réfléchissante peut par exemple être répartie sur cette surface.

Pour les modes de réalisation décrits en référence aux figures 1 à 7, 10, 14, 15, 16 et 22, les moyens de renvoi 6 comprennent en outre des sources de diffusion 13 de lumière, situées du côté de la face de renvoi 5 par rapport au guide 3, et agencées pour capter la lumière émise par les sources d'émission et reçue par la face de renvoi 5 puis pour rediffuser vers l'intérieur du guide 3 la lumière captée.

Sur les figures, 1 à 7 les sources de diffusion 13 sont schématisées par des points noirs répartis sur la face de renvoi 5. Pour ne pas surcharger les figures 1 à 7 et 10 à 22, toutes les sources de diffusion 13 ne sont pas référencées. En outre, la densité réelle des sources de diffusion 13 est plus importante que tel que représenté sur les figures, et ces sources 13 ne sont pas nécessairement réparties de manière uniforme. En particulier, la densité et/ou les dimensions des sources de diffusion 13 est de préférence plus importante au fur et à mesure que l'on s'éloigne de sources d'émission. Les sources de diffusion 13 sont disposées entre d'une part le guide 3 et d'autre part les circuits 10, les fils 11 et la couche réfléchissante 12.

Les sources de diffusion 13 peuvent être réalisées directement sur la face de renvoi 5, et peuvent par exemple comprendre :
1) une fine couche de matière comprenant des particules diffusant la lumière et disposée sur toute la face de renvoi 5, et/ou une fine couche de matière par exemple de gel UV sur lequel est réalisée une microstructure, et/ou
2) des points de matière répartis sur la face de renvoi 5 et par exemple réalisés par sérigraphie, et/ou
3) des creux ou des bosses de matière, par exemple des creux ou des bosses de la matière dont est composée le guide 3 comme représenté sur les figures 10, 14, 15, 16 et 22, ces creux ou bosses étant répartis sur la face de renvoi 5 et étant par exemple réalisés lors d'un moulage ou d'une lamination du guide 3, chaque creux ou bosse pouvant par exemple chacun avoir une forme de prisme, de pyramide, de V (« V-cut ») de lentille ou de portion de sphère, et/ou
4) un aspect non uniforme ou dépoli de la face de renvoi 5, par exemple réalisé par sablage ou par traitement chimique (« Etching ») de la face de renvoi 5 ;

Les sources de diffusion 13 peuvent aussi être réalisées directement sur la surface, orientée vers la face de renvoi 5, des circuits 10 et/ou des fils 11 et/ou de la couche réfléchissante 12, et peuvent par exemple consister en :
1) une fine couche de matière comprenant des particules diffusant la lumière et disposée sur toute cette surface, et/ou
2) des points de matière répartis sur cette surface et par exemple réalisés par sérigraphie ou par projection, et/ou
3) des creux ou des bosses de matière, par exemple des creux ou des bosses de la matière dont est composée les circuits 10 et/ou les fils 11 et/ou la couche réfléchissante 12, ces creux ou bosses étant répartis sur cette surface et étant par exemple réalisés lors d'un moulage ou d'une lamination respectivement des circuits 10 et/ou des fils 11 et/ou de la couche 12, chaque creux ou bosse pouvant par exemple chacun avoir une forme de prisme, de pyramide, de lentille ou de portion de sphère.

Le dépolissage de la face de renvoi 5 est une variante qui minimise l'épaisseur du module, et elle maximise donc la flexibilité du module.

Pour les modes de réalisation décrits en référence aux figures 1 à 7 et 10 à 22 le module 1 comprend en outre des sources de diffusion 14 de lumière, situées du côté de la face de transmission 4 par rapport au guide 3, et agencées pour capter la lumière émise par les sources d'émission et reçue par la face de transmission 4 puis pour rediffuser la lumière captée vers l'extérieur du guide 3 et vers des couches supérieures 15, 16, 17.

Sur les figures 1 à 7, les sources de diffusion 14 sont schématisées par des points noirs répartis sur la face de transmission 4. Pour ne pas surcharger les figures 1 à 7 et 10 à 22, toutes les sources de diffusion 14 ne sont pas référencées. En outre, la densité réelle des sources de diffusion 14 est plus importante que tel que représenté sur les figures, et ces sources 14 ne sont pas nécessairement réparties de manière uniforme. En particulier, la densité et/ou les dimensions des sources de diffusion 14 est de préférence plus importante au fur et à mesure que l'on s'éloigne de sources d'émission. Les sources de diffusion 14 sont disposées entre d'une part le guide 3 et d'autre part les couches supérieures 15, 16, 17.

Les sources de diffusion 14 peuvent être réalisées directement sur la face de transmission 4, et peuvent par exemple consister en :
1) une fine couche de matière comprenant des particules diffusant la lumière et disposée sur toute la face de transmission 4 (tel un film PET, par exemple de chez Eternal Chemical CO. LTD n°DI-780A/DI-780C d'épaisseur typique de 100-200 micromètres), et/ou une fine couche de matière par exemple de gel UV sur lequel est réalisée une microstructure, et/ou
2) des points de matière répartis sur la face de transmission 4 et par exemple réalisés par sérigraphie, et/ou
3) des creux ou des bosses de matière, par exemple des creux ou des bosses de la matière dont est composée le guide 3 comme représenté sur les figures 11 à 13 et 17 à 22, ces creux ou bosses étant répartis sur la face de transmission 4 et étant par exemple réalisés lors d'un moulage ou d'une lamination du guide 3, chaque creux ou bosse pouvant par exemple chacun avoir une forme de prisme, de pyramide, de V (« V-cut ») de lentille ou de portion de sphère, et/ou
4) un aspect non uniforme ou dépoli de la face de transmission 4, par exemple réalisé par sablage ou par traitement chimique (« Etching ») de la face de transmission 4 ;

Les sources de diffusion 14 peuvent aussi être réalisées directement sur une surface d'une des couches supérieures 15 située du côté de la face de transmission par rapport au guide, notamment au moyen d'une couche de diffuseur 33, et peuvent par exemple consister en :
1) une fine couche de matière comprenant des particules diffusant la lumière et disposée sur toute cette surface, et/ou
2) des points de matière répartis sur cette surface et par exemple réalisés par sérigraphie ou par projection, et/ou
3) des creux ou des bosses de matière, par exemple des creux ou des bosses de la matière dont est composée cette couche supérieure 15, ces creux ou bosses étant répartis sur cette surface et étant par exemple réalisés lors d'un moulage ou d'une lamination de cette couche supérieure 15.

Le dépolissage de la face de transmission 4 est une variante qui minimise l'épaisseur du module, elle diminue le nombre de couches et elle maximise donc la flexibilité du module.

Pour l'ensemble des modes de réalisation décrits en référence aux figures 1 à 7 et 10 à 22, les sources d'émission sont situées dans le guide sans espace intermédiaire entre le guide et les sources d'émission, en particulier sans espace d'air. Le guide comprend un matériau initialement liquide ou pâteux et solidifié après insertion des sources d'émission dans le guide. Ainsi, on ne fabrique pas de cavités pour encapsuler les sources d'émission avec un espace d'air intermédiaire, ce qui évite de devoir traiter les surfaces de telles cavités avec un traitement antireflet pour diminuer les pertes d'énergie par réflexion.

Pour les modes de réalisation décrits en référence aux figures 1 à 7, la couche supérieure située du côté de la face de transmission 4 par rapport au guide 3 et la plus proche du guide est un film de transmission 15 dont le coefficient de transmission de la lumière est de préférence inhomogène.L'inhomogénéité du coefficient de transmission est agencée pour compenser une inhomogénéité de répartition des sources d'émission dans le guide, de sorte que la lumière provenant du guide 3, traversant la face de transmission 4, puis se dirigeant vers l'extérieur du guide soit la plus homogène possible après avoir traversé le film 15. Pour cela, le coefficient de transmission du film 15 varie le long de la largeur et/ou de la longueur du film 15. Pour chaque source d'émission, à partir du point 18 du film 15 le plus proche de cette source d'émission, le coefficient de transmission du film 15 augmente de façon continue lorsque l'on s'éloigne de cette source d'émission selon la direction d'émission 9 de cette source d'émission. Autrement dit, pour chaque source d'émission, à partir du point 18 du film 15 le plus proche de cette source d'émission, le film 15 est plus clair et transparent au fur et à mesure que l'on s'éloigne de cette source d'émission selon la direction d'émission 9 de cette source d'émission. Typiquement, le film 15 comprend une alternance de bandes sombres 22 (à faible coefficient de transmission) superposées aux rangées 8 de DELs et de bandes claires 23 (à fort coefficient de transmission) entre les rangées 8.Sur le film de transmission 15 est disposée une couche 16 comprenant des lentilles. Cette couche 16 est optionnelle. La couche 16 est agencée pour recevoir de la lumière provenant du guide 3 et du film 15, de sorte qu'après avoir traversé la couche 16, les rayons lumineux constituant cette lumière soit orientés sensiblement perpendiculairement à la couche 16 et aux faces 4, 5.La couche supérieure 17 est disposée sur les couches 15, 16 du côté de la face de transmission 4 et consiste :
- soit en l'objet devant être rétro-éclairé par le module 1, de sorte qu'un observateur situé du côté de la face de transmission par rapport au guide et en aval de l'objet observe cet objet,
- soit en un film adhésif permettant de coller le module 1 à l'objet devant être rétro-éclairé par le module 1,
l'objet à rétro-éclairer étant typiquement une couche comprenant une image, par exemple une image publicitaire, un panneau de signalisation ou une enseigne commerciale. Cette couche 17 est optionnelle.

Pour l'ensemble des modes de réalisation décrits en référence aux figures 1 à 7 et 10 à 22, l'ensemble du module 1 est flexible :
- la couche réfléchissante 12 est fine (quelques dizaines ou centaines de micromètres d'épaisseur) et est constituée d'un matériau flexible réfléchissant ou consiste en une couche fine de dépôt métallique ou d'encre blanche réfléchissante.
- les circuits imprimés 10 et les fils 11 sont eux aussi flexibles ; les circuits 10 comprennent typiquement un film de polyimide tel un film Kapton^{®} de chez Du Pont de quelques dizaines de micromètres d'épaisseur (typiquement 0,1 mm) ; les circuits imprimés 10 comprennent en outre des résistances électriques (non représentées sur les figures) reliées électriquement aux sources d'émission et aux fils 11, typiquement une résistance par groupe de trois sources d'émission de type DEL. Pour éviter que ces résistances soient à l'origine de zones d'ombre en bloquant la lumière émise par les sources d'émission, ces résistances sont enterrées dans les circuits imprimés 10, de sorte qu'elles ne dépassent pas de la surface des circuits imprimés et ne sont donc pas situées à l'intérieur du guide 3. Typiquement, on a une résistance par groupe de trois sources d'émission de type DEL et pour une alimentation de 12V et en courant continu.
- le guide 3 est constitué d'un matériau flexible et de préférence initialement liquide ou pâteux lors de la fabrication du module 1 puis solidifié (par refroidissement, par thermofusion, par polymérisation ou autre) après insertion des sources d'émissions dans le guide 3. Le matériau du guide est de préférence une résine acrylate ou un film silicone, mais peut éventuellement aussi être à base d'Ethylène Vinyle Acétate (EVA). L'épaisseur du guide 3 est par exemple de 0,8 millimètre (typiquement entre 0,3 mm et 1,2 mm). Les DELs 2, 19 ont une épaisseur typique de 0,5 millimètre, et peuvent par exemple comprendre des DELs « side view » modèle n° NSSW045T ou NSSW006T de chez Nichia Corporation.
- les couches supérieures 15, 16 sont elles aussi constituées d'un matériau flexible et de préférence solidifiable (par chaleur, par polymérisation ou autre), tel un matériau à base d'EVA.

Enfin, l'ensemble des modes de réalisation décrits en référence aux figures 1 à 7 et 10 à 22 est réalisé selon le procédé de fabrication suivant :
- on insert les sources d'émission dans le guide de lumière 3 les sources d'émission étant insérées de sorte qu'elles sont situées à l'intérieur du guide de lumière entre la face de transmission et la face de renvoi
- on solidifie le matériau du guide après insertion des sources dans le guide.

L'insertion comprend un enrobage des sources d'émission avec le matériau liquide ou pâteux. Les sources sont insérées de sorte que les sources sont situées dans le guide sans espace intermédiaire entre le guide et les sources d'émission, en particulier sans espace d'air. On insert les sources d'émission entre la face de transmission 4 et la face de renvoi 5 de sorte que les sources sont agencées pour émettre de la lumière dans une direction d'émission sensiblement parallèle à la face de renvoi 5. Lors de l'insertion des sources dans le guide, les sources sont portées par au moins un circuit imprimé 10. On insert au moins une rangée 8 de sources en dehors des bords latéraux 7 du guide.

On va maintenant décrire les caractéristiques particulières de chacun des quatre premiers modes de réalisation de module selon invention.

Techniquement, il est très difficile de fabriquer un circuit imprimé 10 flexible dont la largeur ou la longueur est supérieure à cinquante centimètres et supportant des courants élevés.

Dans le premier mode de réalisation de module selon l'invention, en référence à la figure 1, l'ensemble des sources d'émission 2 d'une rangée donnée 8 est porté par un unique circuit imprimé 10 distinct de celui des autres rangées 8. Ainsi, en reliant électriquement les circuits 10 de chacune des rangées 8 par les fils 11, la longueur 100 du premier mode de réalisation de module selon l'invention n'a quasiment pas de limite. En effet, on a représenté trois rangées 8 de sources d'émission sur la figure 1, mais la longueur du premier mode de réalisation de module selon l'invention peut comprendre des dizaines, des centaines ou plus de rangées 8.

Cependant, on voit sur la figure 1 que la largeur 200 du premier mode de réalisation de module selon l'invention est limitée à la largeur maximale de chaque circuit 10.

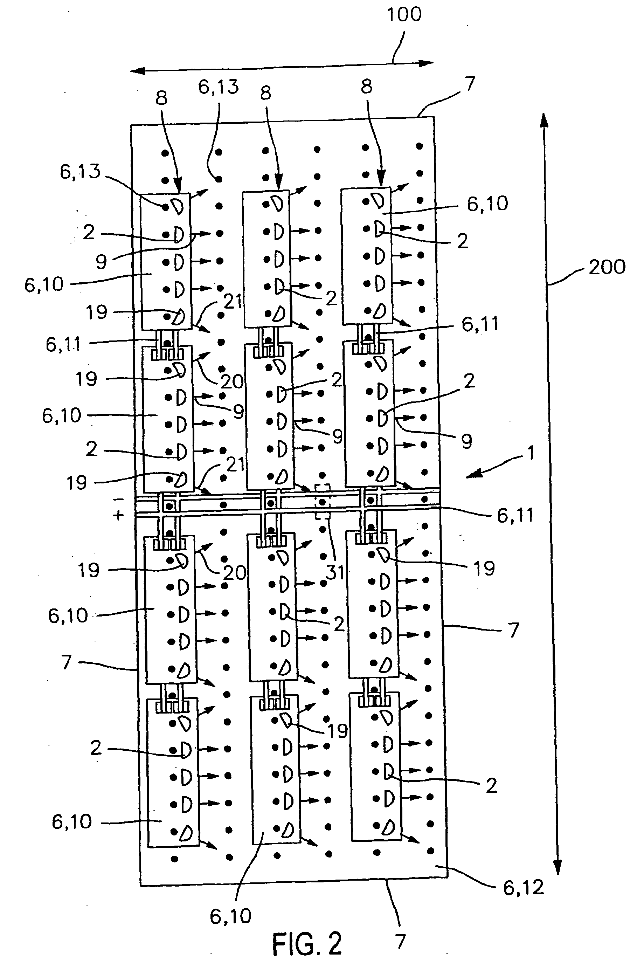

Ainsi, dans le deuxième mode de réalisation de module selon l'invention et en référence à la figure 2, l'ensemble des sources d'émission 2 d'une rangée donnée 8 est porté par plusieurs circuits imprimés 10 reliés électriquement entre eux parallèlement à la direction d'alignement par des fils 11 permettant d'alimenter les sources d'émission 2 de la rangée donnée. Ainsi, on a représenté sur la figure 2 quatre circuits imprimés 10 par rangée 8, mais une rangée pourrait comprendre encore plus de circuits 10. En multipliant les circuits imprimés 10 pour une rangée 8, la largeur 200 du module selon l'invention n'a quasiment pas de limite. Ce module 1 est particulièrement adapté au rétro éclairage de grands objets telle une affiche publicitaire, car il peut faire plusieurs mètres de longueur et de largeur.

Pour éviter qu'il existe des zones mal éclairées entre des circuits imprimés 10 d'une même rangée 8, chaque circuit imprimé 10 d'une rangée donnée 8 comprend au moins une source d'émission supplémentaire 19 sensiblement alignée avec les sources d'émission 2 portées par ce circuit qui émettent de la lumière selon la direction principale d'émission 9, chaque source supplémentaire 19 étant agencée pour émettre de la lumière selon une direction 20, 21 correspondant à la direction principale 9 déviée vers un autre circuit imprimé de la rangée.

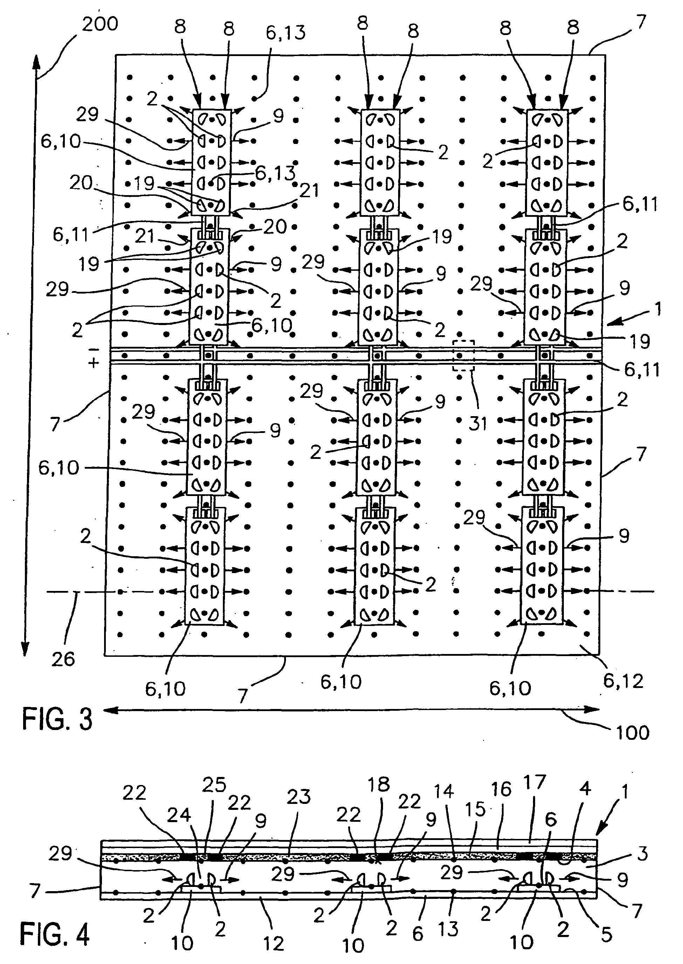

En référence aux figures 3 à 6, dans le troisième et le quatrième mode de réalisation de module selon l'invention décrits uniquement pour leurs différences par rapport au deuxième mode, chaque circuit imprimé 10 comprend :
- un premier alignement de sources d'émission 2 agencées pour émettre de la lumière selon une première direction principale d'émission 9, et
- un deuxième alignement de sources d'émission 2 parallèle au premier alignement et dont les sources d'émission sont agencées pour émettre de la lumière selon une deuxième direction principale d'émission 29, la première direction d'émission 9 étant sensiblement opposée à la deuxième direction d'émission 29 lorsque le module 1 est mis à plat.

Cela permet d'augmenter la distance entre les circuits imprimés 10 perpendiculairement à la direction d'alignement, et de réduire les coûts de fabrication du module 1.

En référence aux figures 3 et 4, pour chaque circuit imprimé 10 du troisième mode de réalisation de module selon l'invention, le premier et le deuxième alignement de sources de ce circuit se font dos par rapport à leurs directions d'émission respectives 9, 29. Autrement dit, pour un circuit donné, le premier alignement de sources de ce circuit émet dans une première direction 9 sensiblement opposée à la direction partant du premier alignement vers le deuxième alignement de ce circuit, et le deuxième alignement de sources de ce circuit émet dans une deuxième direction 29 sensiblement opposée à la direction partant du deuxième alignement vers le premier alignement de ce circuit. De ce fait, pour un circuit donné, il existe une zone mal éclairée 24 entre le premier est le deuxième alignement de sources de ce circuit. Le film 15 comprend donc en outre des bandes claires supplémentaires 25 (de fort coefficient de transmission) entre le premier alignement et le deuxième alignement de chaque circuit 10.

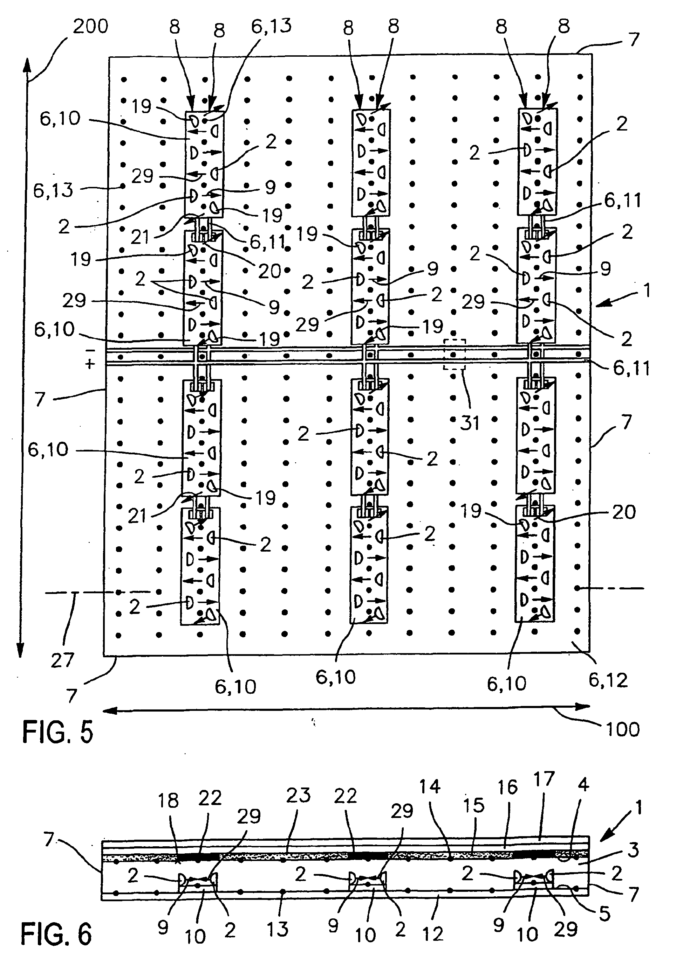

En référence aux figures 5 et 6, pour chaque circuit imprimé 10 du quatrième mode de réalisation de module selon l'invention, le premier et le deuxième alignement de sources de ce circuit se font face par rapport à leurs directions d'émission respectives 9, 29. Autrement dit, pour un circuit donné, le premier alignement de sources de ce circuit émet dans une première direction 9 qui pointe vers le deuxième alignement de ce circuit, et le deuxième alignement de sources de ce circuit émet dans une deuxième direction 29 qui pointe vers le premier alignement de ce circuit. Ainsi, le quatrième mode de réalisation de module selon invention ne comprend pas les zones mal éclairées 24 et les bandes claires supplémentaires 25 du troisième mode.

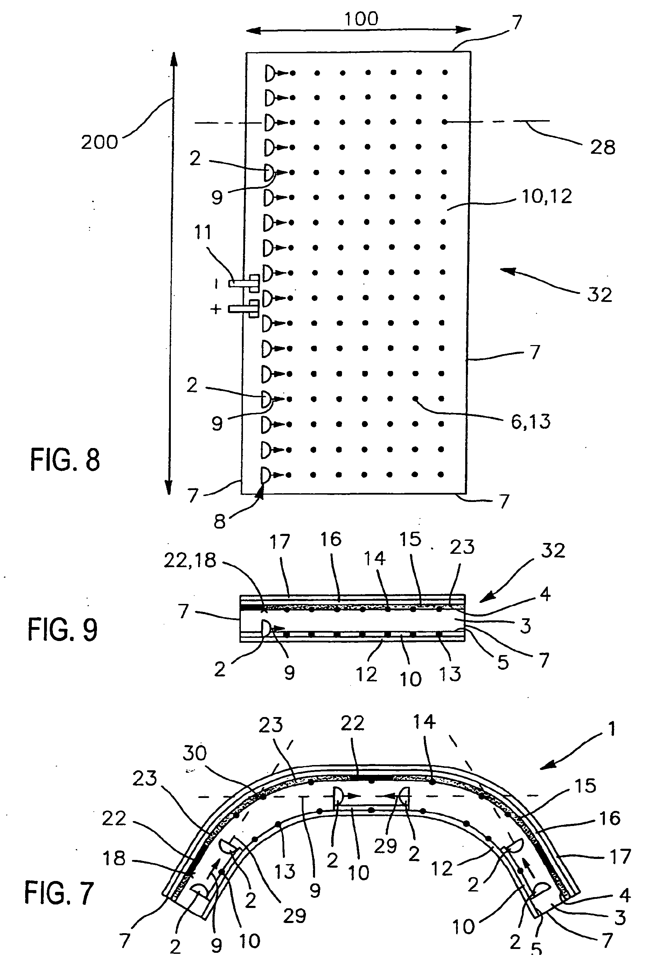

La figure 7 illustre de profil une variante du quatrième mode de réalisation de module selon l'invention représenté sur la figure 5. Dans cette variante, le film 15 est agencé pour compenser une inhomogénéité de la lumière émergeant de la face de transmission 4 due à une courbure du guide 3. Le film 15 comprend des minimums locaux 30 de coefficient de transmission de la lumière au niveau de chaque intersection entre deux directions d'émission 9, 29 de deux sources d'émission ou de deux rangées de sources d'émission.

Dans une variante (non représentée) des troisième et quatrième modes de réalisation de module selon l'invention, chaque premier alignement de sources peut être aligné avec un des deuxièmes alignements de sources. Ainsi, cette variante de module selon l'invention comprend plusieurs rangées 8 de sources d'émission, les sources d'émission d'une rangée donnée émettant alternativement selon la première 9 et la deuxième 29 directions d'émission.

On va maintenant décrire les caractéristiques particulières de chacun des modes de réalisation de module selon invention représentés sur les figures 10 à 16. Ces modes de réalisation ne seront décrits que pour leurs différences par rapport au troisième mode de réalisation des figures 3 et 4.

Chacun des modes de réalisation des figures 10 à 16 comprend un guide 3 obtenu par moulage. En effet, pour fabriquer le module 1, l'insertion des sources dans le guide comprend un moulage d'au moins une partie du guide sur un substrat sur lequel les sources d'émission sont disposées.

Dans le cas des modes de réalisation illustrés sur les figures 10 et 11, le substrat ne fait pas partie du module, et on démoule la partie moulée du guide.

Dans le cas des modes de réalisation illustrés sur les figures 12 à 16, le substrat fait partie du module, la partie moulée du guide n'étant pas démoulé du substrat.

Dans le cas particulier du sixième mode de réalisation de module 1 illustré sur la figure 10, une face de moulage du guide correspondant à la face de renvoi 5 est en contact avec le substrat lors du moulage. Le substrat comprend des structures en creux réparties sur sa surface qui est en contact avec la partie moulée 35 du guide lors du moulage de sorte que le guide comprenne des bosses réparties sur la face de moulage, ayant une forme de portion de sphère et jouant le rôle de source de diffusion 13. Après avoir démoulé le guide 3, on complète la partie moulée du guide en ajoutant :
- du côté de la face de renvoi 5, une couche d'air 34 qui est en contact avec la face de renvoi ; cette couche d'air est située entre la face de renvoi 5 et la surface réfléchissante 12, et
- du côté de la face de transmission 4, une couche d'air 34 qui est en contact avec la face de transmission ; cette couche d'air est située entre la face de transmission 4 et le film diffuseur 33.

Dans le cas particulier du septième mode de réalisation de module 1 illustré sur la figure 11, une face de moulage du guide correspondant à la face de renvoi 5 est en contact avec le substrat lors du moulage. Après avoir démoulé le guide 3, on complète la partie moulée du guide 35 en ajoutant :
- du côté de la face de renvoi 5, une couche d'air 34 qui est en contact avec la face de renvoi ; cette couche d'air est située entre la face de renvoi 5 et la surface réfléchissante 12,
- du côté de la face de transmission, une couche 36 qui possède un indice de réfraction sensiblement égal à un indice de réfraction de la partie moulée 35 du guide, qui complète la partie moulée du guide, qui fait partie du guide 3 et qui comprend une répartition de structures en creux et bosses jouant le rôle de source de diffusion 14, et
- du côté de la face de transmission 4, une couche d'air 34 qui est en contact avec la face de transmission ; cette couche d'air est située entre la couche 36 et le diffuseur 33, c'est-à-dire entre la face de transmission 4 et le film diffuseur 33.

Dans le cas particulier du huitième mode de réalisation de module 1 illustré sur la figure 12, une face de moulage du guide correspondant à la face de transmission 4 est en contact avec le substrat lors du moulage. Le substrat comprend des structures en creux et bosses réparties sur sa surface qui est en contact avec la partie moulée du guide 35 lors du moulage de sorte que le guide comprenne respectivement des bosses et/ou creux réparties sur la face de moulage et jouant le rôle de source de diffusion 14. On complète la partie moulée du guide 35 en ajoutant :
- du côté de la face de renvoi 5, une couche d'air 34 qui est en contact avec la face de renvoi ; cette couche d'air est située entre la face de renvoi 5 et la surface réfléchissante 12.

Le substrat comprend :
- le diffuseur 33, et
- une couche 37 :
   o qui est en contact avec la face de transmission du guide,
   o située entre la face de transmission et le diffuseur,
   o qui comprend les structures en creux et bosses réparties sur la surface du substrat, et
   o qui possède un indice de réfraction inférieur à un indice de réfraction de la partie moulée 35 du guide.

Dans le cas particulier du neuvième mode de réalisation de module 1 illustré sur la figure 13, une face de moulage du guide correspondant à la face de transmission 4 est en contact avec le substrat lors du moulage. Le substrat comprend une couche 36 qui est en contact avec la partie moulée 35 du guide, qui possède un indice de réfraction sensiblement égal à un indice de réfraction de la partie moulée du guide, qui complète la partie moulée du guide et qui fait partie du guide 3. Cette couche 36 d'indice égal comprend des structures en bosses jouant le rôle de source de diffusion 14 et réparties sur une première surface opposée à une deuxième surface qui est en contact avec la partie moulée du guide. On met la première face de la couche 36 d'indice égal en contact avec une couche d'air 34 ; cette couche d'air est située entre la couche 36 et le diffuseur 33, c'est-à-dire entre la face de transmission 4 et le diffuseur 33.

On complète la partie moulée du guide 35 en ajoutant :
- du côté de la face de renvoi 5, une couche d'air 34 qui est en contact avec la face de renvoi ; cette couche d'air est située entre la face de renvoi 5 et la surface réfléchissante 12.

Dans le cas particulier du dixième mode de réalisation de module 1 illustré sur la figure 14, une face de moulage du guide correspondant à la face de renvoi 5 est en contact avec le substrat lors du moulage. Le substrat comprend une couche 36 qui est en contact avec la partie moulée 35 du guide, qui possède un indice de réfraction sensiblement égal à un indice de réfraction de la partie moulée 35 du guide, qui complète la partie moulée du guide et qui fait partie du guide 3. Cette couche 36 d'indice égal comprend des structures en bosses jouant le rôle de source de diffusion 13 et réparties sur une première surface opposée à une deuxième surface qui est en contact avec la partie moulée du guide. On met la première face de la couche 36 d'indice égal en contact avec une couche d'air 34 ; cette couche d'air est située entre la couche 36 et la couche réfléchissante 12, c'est-à-dire entre la face de renvoi 5 et la couche réfléchissante 12.

On complète la partie moulée du guide 35 en ajoutant :
- du côté de la face de transmission 4, une couche d'air 34 qui est en contact avec la face de transmission ; cette couche d'air est située entre la face de transmission 4 et le diffuseur 33.

Dans le cas particulier du onzième mode de réalisation de module 1 illustré sur la figure 15, une face de moulage du guide correspondant à la face de renvoi 5 est en contact avec le substrat lors du moulage. Le substrat comprend des structures en creux et bosses réparties sur sa surface qui est en contact avec la partie moulée du guide 35 lors du moulage de sorte que le guide comprenne respectivement des bosses et/ou creux réparties sur la face de moulage et jouant le rôle de source de diffusion 13. On complète la partie moulée du guide 35 en ajoutant du côté de la face de transmission 4, une couche 37 :
- qui est en contact avec la face de transmission du guide,
- située entre la face de transmission et le diffuseur 33, et
- qui possède un indice de réfraction inférieur à un indice de réfraction de la partie moulée 35 du guide.

Le substrat comprend :
- la couche réfléchissante 12, et
- une couche 37 :
   o qui est en contact avec la face de renvoi du guide,
   o située entre la face de renvoi 5 et la couche réfléchissante 12,
   o qui comprend les structures en creux et bosses réparties sur la surface du substrat, et
   o qui possède un indice de réfraction inférieur à un indice de réfraction de la partie moulée 35 du guide.

Dans le cas particulier du douzième mode de réalisation de module 1 illustré sur la figure 16, une face de moulage du guide correspondant à la face de renvoi 5 est en contact avec le substrat lors du moulage. Le substrat comprend des structures en creux et bosses réparties sur sa surface qui est en contact avec la partie moulée du guide 35 lors du moulage de sorte que le guide comprenne respectivement des bosses et/ou creux réparties sur la face de moulage et jouant le rôle de source de diffusion 13. On complète la partie moulée du guide 35 en ajoutant du côté de la face de transmission 4, une couche d'air 34 :
- qui est en contact avec la face de transmission du guide, et
- située entre la face de transmission et le diffuseur 33.

Le substrat comprend :
- le ou les circuits imprimés 10 portant les sources d'émission et jouant le rôle de couche réfléchissante 12, et
- une couche 37 :
   o qui est en contact avec la face de renvoi du guide;
   o située entre la face de renvoi 5 et la couche réfléchissante 12,
   o qui comprend les structures en creux et bosses réparties sur la surface du substrat, et
   o qui possède un indice de réfraction inférieur à un indice de réfraction de la partie moulée 35 du guide.

Le ou les circuits imprimés 10 portant les sources d'émission jouent le rôle de couche réfléchissante 12, et comporte une couche réflectrice comme une encre blanche et une couche de gel UV d'indice inférieur à celui du guide 3. La couche réfléchissante 12 porte des sources d'émission sur ses deux faces opposées. Ce douzième mode de réalisation comprend deux guides de lumière 3 fabriqués tour à tour comme expliqué précédemment sur chacun des deux côtés de la couche réfléchissante 12.

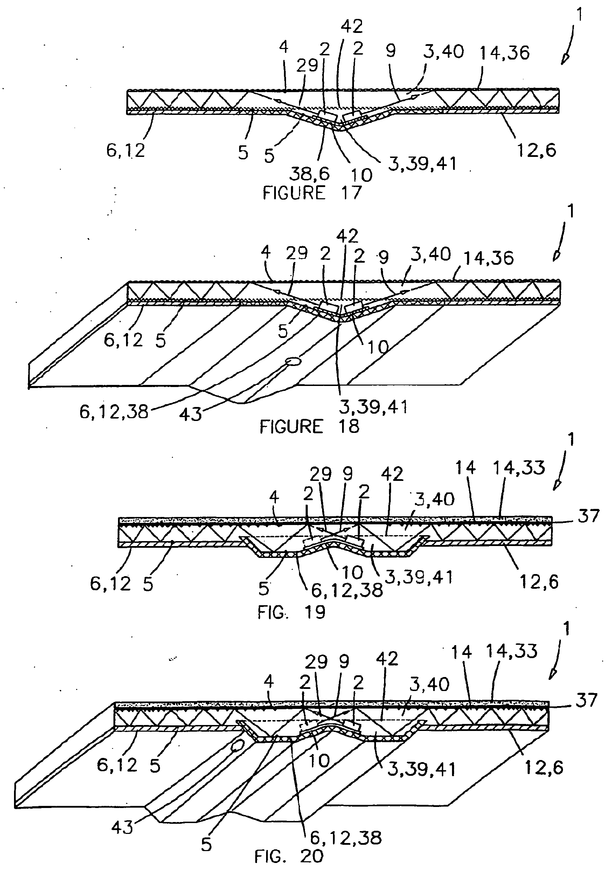

On va maintenant décrire les caractéristiques particulières de chacun des modes de réalisation de module selon invention illustrés sur les figures 17 à 22.

Les treizième, quinzième et seizième modes de réalisation illustrés sur les figures 17, 18, 21 et 22 ne seront décrits que pour leurs différences par rapport au troisième mode de réalisation illustré sur les figures 3 et 4.

Le quatorzième mode de réalisation illustré sur les figures 19 et 20 ne sera décrit que pour ses différences par rapport au quatrième mode de réalisation illustré sur les figures 5 et 6.

Pour chacun des modes de réalisation de module selon invention illustrés sur les figures 17 à 22, les directions 9 et 29 ne sont pas nécessairement opposées mais sont différentes. Les projections des directions 9 et 29 sur le plan de la face de transmission 4 sont opposées.

Chacun des modes de réalisation de module selon invention illustrés sur les figures 17 à 22 comprend une bande 38 dont la tranche vue de coupe est représentée sur les figures avec un hachurage de lignes croisées. Sur une des faces de la bande, un creux longiforme 39 est formé le long de cette bande. Ce creux peut être un creux simple comme illustré sur les figures 17, 18 et 21, ou un creux muni de plusieurs bosses comme illustré sur les figures 19, 20 et 22. La bande 38 porte deux alignements de sources d'émission situées à l'intérieur du creux longiforme 39 et alignées le long du creux longiforme, le creux étant rempli de matière faisant partie du guide de lumière. Chaque alignement est agencé pour émettre de la lumière dans une direction différente 9, 29. Chaque source d'émission portée à l'intérieur du creux longiforme 39 est agencée pour émettre de la lumière dans une direction d'émission sensiblement parallèle à une portion du creux de la bande portant cette source. La bande 38 est située du côté de la face de renvoi 5 du guide, est en contact avec la face de renvoi 5, et comprend une partie de la couche réfléchissante 12 agencée pour renvoyer vers l'intérieur du guide de la lumière émise par les sources d'émission et reçue par la face de renvoi. La couche réflectrice 12 est réalisée à l'extérieur de la bande 38 (c'est-à-dire sur la face ne comprenant pas le creux 39) par pulvérisation d'un spray de couleur blanche ou d'une encre de couleur blanche ou d'une résine époxy de couleur blanche sur l'ensemble de la face de renvoi des parties 40 et 41 du guide 3 ou sur une couche intermédiaire (telle une couche 37 d'indice optique plus faible que celui du guide 3) située du côté de la face de renvoi 5. La bande 38 est transparente à la lumière, et la face de la bande portant les sources d'émission, formant le creux 39 et en contact avec le guide 3 est réalisée dans un matériau d'indice inférieur à celui du guide 3 pour augmenter la réfraction. La face de renvoi 5 du guide 3 est donc composée à la fois par la première 40 et la deuxième 41 partie du guide 3. Dans une variante de ces modes de réalisation, la couche réflectrice 12 est réalisée à l'intérieur de la bande 38.

A chacune des extrémités de la bande 38, la bande porte à l'intérieur du creux 39 des sources d'émissions qui éclairent en direction de l'extérieur du creux, sensiblement perpendiculairement à la direction d'émission 9, 29 des deux alignements de sources. Chaque source d'émission portée à l'intérieur du creux longiforme 39 est agencée pour émettre de la lumière dans une direction d'émission sensiblement parallèle à une portion du creux de la bande portant cette source.

Chacun des modes de réalisation de module selon invention illustrés sur les figures 17 à 22 est de préférence fabriqué selon le procédé suivant :
- on applique le côté creux (c'est-à-dire la face de la bande 38 sur laquelle est formé le creux 39) de la bande 38 sur une première partie 40 du guide de lumière sensiblement plane,
- on remplit le creux 39 avec la matière liquide ou pâteuse de manière à former une deuxième partie 41 du guide de lumière en contact avec la première partie du guide de lumière.

La bande est appliquée du côté de la face de renvoi du guide.

Avant le remplissage, la première partie 40 du guide de lumière est solide.

La bande 38 comprend un trou de remplissage 43 à travers lequel on remplit le creux avec la matière liquide ou pâteuse. La bande est remplie de résine une fois positionnée sur la partie principale 40 du guide. Le trou de remplissage 43 permet le coulage de la résine liquide ou pâteuse dans la bande. Chacune des deux extrémités de la bande 38 est fermée avec un bouchon. Le trou 43 est situé sur un de ces bouchons. Chaque bouchon est muni d'un clapet, par exemple d'un clapet à bille ou d'un clapet comprenant un tube en élastomère se déformant sous la pression de la matière liquide ou pâteuse au cours du remplissage du creux 39. Un des bouchons comprend un clapet au niveau du trou 43, ce clapet étant agencé pour éviter que la matière liquide ou pâteuse ne ressorte du trou 43 lorsque l'on débranche l'injection de matière liquide ou pâteuse, tandis que l'autre bouchon comprend un autre clapet agencé pour laisser sortir l'air du creux 39 au cours du remplissage. Une injection de la résine en nappe permet d'éviter des zones d'air. En outre, un des bouchons comprend des embases de connexion et sert de boitier de connexion électrique pour alimenter électriquement les sources d'émission portées par cette bande.

La deuxième partie 41 du guide de lumière est solidifiée après le remplissage. Après sa solidification, la deuxième partie 41 est solidaire de la première partie 40 du guide, sans espace d'air entre ces parties 40 et 41.

Après la solidification de la deuxième partie 41 du guide, la première partie 40 et la deuxième partie 41 du guide de lumière 3 sont solidaires le long d'une ligne de jonction 42.

Chacun des modes de réalisation de module selon invention illustrés sur les figures 17 à 22 comprend, du côté de la face de transmission 4, une couche 33 ou 36 telle que décrite précédemment et jouant le rôle de sources de diffusion 14. Cette couche 33 est optionnelle. Le module 1 ne comprend pas cette couche 33 dans le cas où le module 1 est destiné à être collé sur un panneau ou une plaque diffusante.

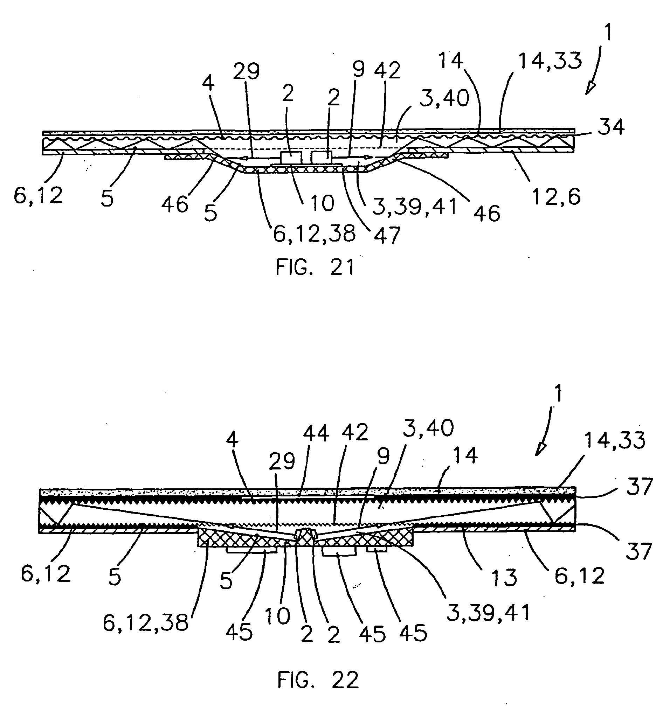

En outre, comme illustré sur les figures 17 à 22, chacun de ces modes de réalisation de module selon invention peut comprendre, du côté de la face de renvoi 5 ou de la face de transmission 4:
- une couche d'air 34 qui est en contact respectivement avec la face de renvoi ou la face de transmission du guide, comme cela est illustré du côté de la face de transmission sur la figure 21, et/ou
- une couche 37 qui possède un indice de réfraction inférieur à un indice de réfraction du guide et qui est en contact respectivement avec la face de renvoi ou la face de transmission du guide, comme cela est illustré du côté de la face de transmission 4 sur les figures 19, 20 et 22, et comme cela est illustré du côté de la face de renvoi 5 sur la figure 22, et/ou
- des structures en creux et/ou en bosses réparties sur la face de transmission 4, comme cela est illustré du côté de la face de transmission 4 sur la figure 21, et/ou
- des structures en creux et/ou en bosses réparties sur la face de renvoi 5, comme cela est illustré du côté de la face de renvoi 5 sur les figures 17 et 18.

Dans le cas particulier du mode de réalisation illustré sur la figure 22, les composants électroniques et l'Electronique de commande 45 à courant constant des sources d'émission sont intégrés dans la bande 38, et on alimente la bande directement en 220V, cette bande étant comme une « Ampoule à DEL extra plate ». De même, pour tous les autres modes de réalisation du module 1, les composants électroniques et l'Electronique de commande 45 peuvent être intégrés sur la face du circuit imprimée 10 qui n'est pas en contact avec le guide 3 (tel qu'illustré sur la figure 22) ou sur la face du circuit imprimée 10 qui est en contact avec le guide 3 et qui portent les sources d'émissions dans le cas où ces sources sont des DELs de puissance.

Dans le cas particulier du mode de réalisation illustré sur la figure 21, la bande 38 comprend :
- une surface plane 47 formant le fond du creux 39 et qui est sensiblement parallèle à la face de transmission
- deux bords 46 qui bordent le creux 39 le long de la bande 38, et qui sont obliques par rapport à la face de transmission 4 et à la surface 47
et chaque alignement de sources 2 est agencé pour émettre de la lumière dans une direction 9 ou 29 qui est dirigée vers l'un des bords 46 et qui est sensiblement parallèle à la face de transmission, les directions 9 et 29 étant opposées.

Bien entendu, les figures 17 à 22 illustrent une seule bande 38, mais les modules 1 partiellement illustrés sur ces figures comprennent de préférence plusieurs bandes 38 parallèles et régulièrement disposées du côté de la face de renvoi 5 du module 1.

Pour chacun des modes de réalisation de module selon l'invention illustrés sur les figures 17 à 22, la bande 38 peut être réalisée avec un profil extrudé ou une pièce injectée ayant des propriétés de réflexion (blanc), muni ensuite éventuellement sur la face intérieure (c'est-à-dire du côté du creux) d'une couche d'un gel d'indice inférieur à celui du guide. Sont placés à l'intérieur de cette bande les sources puis une résine est coulée sur les sources, le profilé servant de maintient au circuit imprimé 10 et aux sources et permettant de contenir la résine. Cette bande est collée sur la partie principale du guide 40.

Dans une variante, on commence par remplir le creux 39 avec la matière liquide ou pâteuse puis on applique la bande contre la partie principale du guide 40. On peut remplir le creux 39 via le trou 43 ou directement en versant la matière liquide ou pâteuse sur la face de la bande 38 sur laquelle est formé le creux 39. Ainsi, la bande peut être appliquée ou collée sur la partie principale 40 du guide au cours de la solidification de la partie 41 et dans ce cas la matière liquide ou pâteuse en excès est évacuée lorsque l'on écrase la bande 38 contre la partie 40. En outre, la bande peut être appliquée ou collée sur la partie principale 40 du guide après la solidification ; dans ce cas on remplit de préférence la bande 38 via le trou 43 après avoir appliqué la bande 38 sur un support tel une plaque en verre. Si la bande est appliquée sur la partie principale 40 du guide après la solidification de la partie 41, on dispose un gel de contact entre les parties 40 et 41 pour éviter tout interstice d'air entre les parties 40 et 41, et on maintient la bande 38 sur le module 1 à l'aide d'une pression externe ou d'un adhésif.

Pour chacun des modes de réalisation de module selon l'invention illustrés sur les figures 17 à 22, la partie principale 40 du guide peut être fabriquée par extrusion ou moulage selon un procédé de fabrication par moulage identique à celui décrit en référence aux figures 10 à 16, et on peut déposer sur cette partie principale 40 du côté de la face de renvoi 5 et/ou de transmission 4 des structures 13, 14 en creux et/ou bosses par estampage ou par gel UV, des couches d'air 34, des couche d'indice inférieur 37 etc... comme décrit en référence aux figures 10 à 16.

En outre, pour chacun des modes de réalisation de module selon l'invention illustrés sur les figures 17 à 22, le creux 39 permet d'utiliser des sources d'émission plus volumineuses et plus puissantes.

Dans une variante des modes de réalisation de module selon l'invention illustrés sur les figures 17 à 22, la bande 38 est métallique, par exemple en aluminium. En outre, la bande 38 est munie de moyens de refroidissement agencés pour dissiper de la chaleur émise par les sources d'émission portées par cette bande, comme par exemple des ailettes qui augmentent la surface de refroidissement de la bande ou un ventilateur ou un circuit de refroidissement.

De manière générale, pour les modes de réalisation de module selon l'invention décrits précédemment, la fonction de chaque couche d'air 34 et de chaque couche 37 d'indice inférieur à celui du guide est de créer une différence d'indice optique entre le guide 3 et l'extérieur du guide au niveau de la face de renvoi 5 ou de transmission 4, de manière à réfléchir au moins en partie vers l'intérieur du guide 3 de la lumière provenant du guide et arrivant au niveau de la face de renvoi 5 ou de transmission 4. Ainsi, on « piège » la lumière à l'intérieur du guide 3, ce qui permet au guide de guider et transporter la lumière émise par les sources. Bien entendu, la réflexion de lumière vers le guide 3 ne doit pas être totale au niveau de la face de transmission 4, pour que de la lumière parvienne à l'objet devant être éclairé par le module 1. Chaque couche d'air 34 peut être remplacée par une couche 37 d'indice inférieur à celui du guide.

Pour les modes de réalisation illustrés sur les figures 10 à 22 :
- la partie moulée 35 ou principale 40 du guide peut être réalisée :
   ∘ par coulée, la partie moulée 35 ou principale 40 du guide comprenant de la résine acrylique réticulée par UV par exemple ou une résine époxy, ou des caoutchoucs silicones à 2 composants réticulés par chauffage de 110°C à 120°C
   o par pressage à chaud, la partie moulée 35 ou principale 40 du guide comprenant un film Silicone thermoplastique placé sur les sources d'émission et le substrat ; la température de mise en oeuvre est faible de 100°C à 120°C
   o Par extrusion, la partie moulée 35 ou principale 40 du guide comprenant du PMMA (polyméthacrylate de méthyle), du COC (Cyclic Olefin Copolymer), du PolyCarbonate (PC), ou du polyester
- les couches 37 sont typiquement en Gel UV ou Résine acrylique ou une résine époxy d'indice bas environ égal à 1,3

On remarque que, pour tous les modes de réalisation venant d'être décrits en référence aux figures 1 à 7 et 10 à 22, un nombre limité de rangées 8 est représenté sur les figures illustrant ces modes. On peut envisager un module 1 de très grande longueur en multipliant le nombre de rangées parallèles 8 reliées par des fils 11. Le module 1 peut comprendre typiquement des dizaines, des centaines ou plus de rangées 8 parallèles, il peut ainsi avoir une longueur 100 de plusieurs mètres ou plus. Etant flexible, il est de préférence roulé sur sa longueur autour d'un axe parallèle aux rangées 8, de manière à pouvoir être conservé sous la forme d'un rouleau. A partir de ce rouleau, on peut découper selon une ligne de découpe parallèle aux rangées 8 des modules de différentes longueurs selon l'application désirée.

Le rouleau comprend, le long de sa longueur 100, des moyens d'accès périodiques aux fils 11, comme par exemple des trous 31 formés dans la couche 12 et situés au niveau des fils 11 de façon périodique le long de la longueur 100 du rouleau. Bien entendu, ces moyens d'accès sont spatialement périodiques, c'est-à-dire qu'ils sont situés avec une périodicité spatiale sur le module 1. Les trous 31 sont typiquement accessibles via des languettes formés dans la couche 12 pouvant être décollées du module selon l'invention. Ces moyens d'accès périodique permettent d'alimenter électriquement les sources d'émission de n'importe quel module découpé à partir du rouleau et ayant une longueur supérieure à la périodicité des trous 31.

Dans une variante dénuée de fils 11 reliant les bandes entre elles, le rouleau comprend, le long de sa longueur 100, des moyens d'accès et de connexion électrique périodiques, comme par exemple des fils de connexion électrique qui sortent au niveau de chaque bande de circuit imprimé qui porte des sources d'émission. Ces moyens de connexion étant accessibles à l'extérieur du module, cette disposition offre plus de souplesse pour le pilotage des sources d'émission. Bien entendu, ces moyens d'accès sont spatialement périodiques, c'est-à-dire qu'ils sont situés avec une périodicité spatiale sur le module 1.

Le module d'éclairage selon l'invention peut aussi être de petite taille, par exemple pour une application de rétro éclairage d'une étiquette dans un supermarché, d'un petit panneau de signalisation ou d'une veilleuse.

Le film diffuseur 33 est de préférence :
- un film de PET (PolyEthylene Terephtalate) avec un revêtement (« coating ») de Micro billes, comme illustré sur les figures 10 à 14, 16 et 19 à 22, ou
- un motif spécial formé sur un gel UV, comprenant par exemple une couche de demi-sphères, comme illustré sur la figure 15.

Pour les modes de réalisation illustrés sur les figures 11 à 13 et 22, le module 1 comprend une couche 44 servant à masquer la lumière près des sources d'émission. Cette couche consiste en une impression de matière. Dans le cas des figures 12 et 13, le substrat comprend cette couche 44.

De manière générale, la couche réfléchissante 12 peut être un film blanc (par exemple en POLYESTER) ou un film avec un revêtement (« coating ») métallique.

Nous allons maintenant décrire, en référence aux figures 8 et 9, un cinquième mode de réalisation de module 32 selon l'invention uniquement pour ces différences par rapport au premier mode illustré sur la figure 1. Le module 32 ne comprend qu'une seule rangée 8 de sources d'émission 2, la longueur du module 32 étant typiquement de 15 à 30 centimètres. Toutes les sources d'émission 2 du module 32 sont portées par un unique circuit imprimé 10. La couche réfléchissante 12 est réalisée entre le circuit imprimé 10 et le guide 3, typiquement par un traitement de la surface du circuit 10 plaquée contre la face de renvoi 5.

Bien sûr, l'invention n'est pas limitée aux exemples qui viennent d'être décrits et de nombreux aménagements peuvent être apportés à ces exemples sans sortir du cadre de l'invention. En particulier, dans les modes de réalisation précédemment décrits, la couche supérieure 17 peut consister en une couche de diffusion de la lumière, de sorte que deux couches de diffusion 14, 17 encadrent la couche de lentilles 16. Ainsi, le module selon l'invention n'est pas utilisé comme module de rétro-éclairage mais est utilisé comme une source d'éclairage d'ambiance, émettant une lumière diffuse par exemple dans une pièce d'une maison ou dans une voiture.

Enfin, un des modes de réalisation de module selon l'invention peut comprendre en outre des sources d'émission ou diodes dites « top view » qui peuvent :
- être portées par le ou les circuits imprimés 10,
- émettre en direction de la face de transmission 4,
- être situées entre deux rangées 8 de sources « side view » qui émettent sensiblement parallèlement à la face de réflexion 5.

Ces sources d'émission « top view » peuvent ainsi contribuer à éliminer des zones d'ombre entre des rangées 8 de sources « side view ».

Les sources d'émission peuvent être directement réalisées sur le ou les circuits imprimés 10.

Pour chacun des modes de réalisation, on peut réaliser directement sur le guide de lumière 3 du côté de la face de transmission 4 un masque 44 pour masquer la lumière près des sources d'émission, en réalisant :
- une première impression de gel UV faible sur la face de transmission 4, puis
- une impression couleur sombre par-dessus le gel uv faible, puis
- un revêtement (« coating ») par-dessus l'impression couleur, avec des billes et de la résine diffuseur ou un motif diffuseur (Demi-sphères).

Dans ce document, chaque bande 38 le long de laquelle est formé un creux longiforme 39 peut être assemblée à au moins une autre bande le long de laquelle est formé un creux longiforme. Par exemple, en assemblant deux bandes 38 perpendiculairement et aux extrémités d'une autre bande 38, on obtient une bande Triple en forme de I majuscule comprenant trois creux. De préférence, il n'y a pas de discontinuité entre les creux des différentes bandes ainsi assemblées.

Dans ce document, tout « circuit imprimé » mentionné peut être remplacé de manière plus générale par un substrat agencé pour porter les sources d'émission et comprenant des moyens de connexion électrique avec ces sources.

Enfin, le module 1 peut être utilisé pour :
- créer un éclairage d'ambiance par exemple dans une pièce ou sous la forme d'un plafonnier d'une automobile,
- éclairer le contenu d'étagères ou de meubles, le module 1 étant plat, peu encombrant et dégageant peu de chaleur,
- éclairer une pièce ou des objets en substitution d'un ensemble de tubes néons,
- rétro-éclairer des objets variés, par exemple une petite étiquette dans un rayon d'un super marché ou une grande affiche publicitaire dans une rue,
- rétro-éclairer une enseigne commerciale, une affiche publicitaire ou un panneau de signalisation, ou
- rétro éclairer un écran LCD en particuliers un écran LCD de grandes dimensions.

## Revendications

1. Procédé de fabrication d'un module d'éclairage **caractérisé en ce que** :
- on insert des sources d'émission dans un guide de lumière comprenant un matériau initialement liquide ou pâteux, le guide de lumière (3) comprenant une face de transmission (4) agencée pour transmettre vers un objet à éclairer de la lumière émise par les sources d'émission (2, 19) et une face de renvoi (5) faisant face à la face de transmission (4), les sources d'émission (2, 19) étant insérées de sorte qu'elles sont situées à l'intérieur du guide de lumière (3) entre la face de transmission (4) et la face de renvoi (5)
- on solidifie le matériau initialement liquide ou pâteux du guide après insertion des sources dans le guide,
**caractérisé en ce que** lors de l'insertion des sources dans le guide, les sources sont portées par au moins un circuit imprimé.

2. Procédé selon la revendication 1, **caractérisé en ce que** l'insertion comprend un enrobage des sources d'émission avec le matériau liquide ou pâteux.

3. Procédé selon la revendication 1 ou 2, **caractérisé en ce que** les sources sont insérées de sorte que les sources sont situées dans le guide sans espace intermédiaire entre le guide et les sources d'émission, en particulier sans espace d'air.

4. Procédé selon l'une quelconque des revendications 1 à 3, **caractérisé en ce que** l'on insert les sources d'émission (2, 19) entre la face de transmission (4) et la face de renvoi (5) de sorte que les sources sont agencées pour émettre de la lumière dans une direction d'émission (9, 20, 21, 29) sensiblement parallèle à la face de renvoi (5).

5. Procédé selon l'une quelconque des revendications 1 à 4, **caractérisé en ce que** le guide comprend des bords latéraux reliant la face de transmission et la face de renvoi, et **en ce que** l'on insert au moins une rangée de sources en dehors des bords latéraux du guide.

6. Procédé selon l'une quelconque des revendications 1 à 5, **caractérisé en ce que** l'insertion comprend un moulage d'au moins une partie du guide sur un substrat sur lequel les sources d'émission sont disposées.

7. Procédé selon la revendication 6, **caractérisé en ce qu'**une face de moulage du guide parmi les faces de transmission ou de renvoi est en contact avec le substrat lors du moulage, le substrat comprenant des structures en creux et/ou bosses réparties sur sa surface qui est en contact avec la partie moulée du guide lors du moulage de sorte que le guide comprenne respectivement des bosses et/ou creux réparties sur la face de moulage.

8. Procédé selon l'une quelconque des revendications 6 ou 7, **caractérisé en ce que** le substrat fait partie du module, la partie moulée du guide n'étant pas démoulé du substrat.

9. Procédé selon la revendication 8, **caractérisé en ce que** le substrat comprend des moyens (6, 12, 13) pour renvoyer vers l'intérieur du guide (3) de la lumière émise par les sources d'émission (2, 19) et reçue par la face de renvoi (5).

10. Procédé selon la revendication 8 ou 9, **caractérisé en ce que** le substrat comprend des moyens (33) pour diffuser vers l'extérieur du guide (3) de la lumière émise par les sources d'émission (2, 19) et reçue par la face de transmission (4).

11. Procédé selon l'une quelconque des revendications 1 à 5, **caractérisé en ce que** l'insertion des sources dans le guide comprend les étapes suivantes :
- une fourniture d'une bande le long de laquelle est formé un creux longiforme, la bande portant au moins un alignement de sources d'émission à l'intérieur du creux longiforme et alignées le long du creux longiforme,
- un remplissage du creux avec la matière liquide ou pâteuse de manière à former une deuxième partie du guide de lumière, et
- une application ou un collage de la bande sur une première partie principale du guide après la solidification de la matière liquide ou pâteuse de la deuxième partie du guide de lumière.

12. Procédé selon l'une quelconque des revendications 1 à 5, **caractérisé en ce que** l'insertion des sources dans le guide comprend les étapes suivantes :
- une fourniture d'une bande le long de laquelle est formé un creux longiforme, la bande portant au moins un alignement de sources d'émission à l'intérieur du creux longiforme et alignées le long du creux longiforme,
- une application du côté creux de la bande sur une première partie du guide de lumière,
- un remplissage du creux avec la matière liquide ou pâteuse de manière à former une deuxième partie du guide de lumière en contact avec la première partie du guide de lumière.

13. Procédé selon la revendication 12, **caractérisé en ce qu'**avant le remplissage, la première partie du guide de lumière est solide, la deuxième partie du guide de lumière étant solidifiée après le remplissage.

14. Procédé selon l'une quelconque des revendications 11 à 13, **caractérisé en ce que** la bande porte deux alignements de sources d'émission à l'intérieur du creux longiforme, chaque alignement étant agencé pour émettre de la lumière dans une direction différente

15. Procédé selon l'une quelconque des revendications 11 à 14, **caractérisé en ce que** chaque source portée à l'intérieur du creux longiforme est agencée pour émettre de la lumière dans une direction d'émission (9, 20, 21, 29) sensiblement parallèle à une portion du creux de la bande portant cette source.

16. Procédé selon l'une quelconque des revendications 11 à 15, **caractérisé en ce que** la bande est appliquée du côté de la face de renvoi du guide, et comprend des moyens pour renvoyer vers l'intérieur du guide de la lumière émise par les sources d'émission et reçue par la face de renvoi.

## Patentansprüche

1. Verfahren zur Herstellung eines Beleuchtungsmoduls, **dadurch gekennzeichnet, dass**:
- Emissionsquellen in einen Lichtleiter, der ein anfangs flüssiges oder pastöses Material umfasst, eingesetzt werden, wobei der Lichtleiter (3) eine Transmissionsseite (4), die dazu eingerichtet ist, durch die Emissionsquellen (2, 19) emittiertes Licht zu einem zu beleuchtenden Objekt zu transmittieren, sowie eine Rückstrahlseite (5), die der Transmissionsseite (4) gegenüberliegt, umfasst, wobei die Emissionsquellen (2, 19) so eingesetzt sind, dass sie innerhalb des Lichtleiters (3) zwischen der Transmissionsseite (4) und der Rückstrahlseite (5) gelegen sind,
- das anfangs flüssige oder pastöse Material des Leiters nach Einsetzen der Quellen in den Leiter verfestigt wird,
**dadurch gekennzeichnet, dass** bei Einsetzen der Quellen in den Leiter die Quellen durch wenigstens eine Leiterplatte getragen sind.

2. Verfahren nach Anspruch 1, **dadurch gekennzeichnet, dass** das Einsetzen ein Umhüllen der Emissionsquellen mit dem flüssigen oder pastösen Material umfasst.

3. Verfahren nach Anspruch 1 oder 2, **dadurch gekennzeichnet, dass** die Quellen so eingesetzt werden, dass die Quellen in dem Leiter ohne Zwischenraum zwischen dem Leiter und den Emissionsquellen, insbesondere ohne Luftraum, gelegen sind.

4. Verfahren nach einem der Ansprüche 1 bis 3, **dadurch gekennzeichnet, dass** die Emissionsquellen (2, 19) zwischen der Transmissionsseite (4) und der Rückstrahlseite (5) eingesetzt werden, so dass die Quellen dazu eingerichtet sind, Licht in eine zu der Rückstrahlseite (5) im Wesentlichen parallele Emissionsrichtung (9, 20, 21, 29) zu emittieren.

5. Verfahren nach einem der Ansprüche 1 bis 4, **dadurch gekennzeichnet, dass** der Leiter Seitenkanten, welche die Transmissionsseite und die Rückstrahlseite verbinden, umfasst, und dass wenigstens eine Reihe von Quellen außerhalb der Seitenkanten des Leiters eingesetzt wird.

6. Verfahren nach einem der Ansprüche 1 bis 5, **dadurch gekennzeichnet, dass** das Einsetzen ein Formen wenigstens eines Teils des Leiters an ein Substrat, auf dem die Emissionsquellen angeordnet sind, umfasst.

7. Verfahren nach Anspruch 6, **dadurch gekennzeichnet, dass** eine Formseite des Leiters aus der Transmissions- oder der Rückstrahlseite während des Formens mit dem Substrat in Kontakt ist, wobei das Substrat vertiefte und/oder erhabene Strukturen umfasst, die auf seiner Oberfläche, welche mit dem geformten Teil des Leiters während des Formens in Kontakt ist, verteilt sind, so dass der Leiter über die Formseite verteilte Buckel bzw. Vertiefungen aufweist.

8. Verfahren nach einem der Ansprüche 6 oder 7, **dadurch gekennzeichnet, dass** das Substrat zu dem Modul gehört, wobei der geformte Teil des Leiters nicht von dem Substrat entformt wird.

9. Verfahren nach Anspruch 8, **dadurch gekennzeichnet, dass** das Substrat Mittel (6, 12, 13) umfasst, um durch die Emissionsquellen (2, 19) emittiertes und durch die Rückstrahlseite (5) aufgenommenes Licht zum Inneren des Leiters (3) zurückzusenden.

10. Verfahren nach Anspruch 8 oder 9, **dadurch gekennzeichnet, dass** das Substrat Mittel (33) umfasst, um durch die Emissionsquellen (2, 19) emittiertes und durch die Transmissionsseite (4) aufgenommenes Licht zur Außenseite des Leiters (3) zu streuen.

11. Verfahren nach einem der Ansprüche 1 bis 5, **dadurch gekennzeichnet, dass** das Einsetzen der Quellen in den Leiter die folgenden Schritte umfasst:
- ein Bereitstellen eines Streifens, entlang dessen eine längliche Vertiefung ausgebildet ist, wobei der Streifen wenigstens eine Aneinanderreihung von Emissionsquellen innerhalb der länglichen Vertiefung, welche entlang der länglichen Vertiefung fluchten, trägt,
- ein Füllen der Vertiefung mit dem flüssigen oder pastösen Material, um einen zweiten Teil des Lichtleiters zu bilden, und
- ein Aufsetzen oder ein Aufkleben des Streifens auf einen ersten Hauptteil des Leiters nach der Verfestigung des flüssigen oder pastösen Materials des zweiten Teils des Lichtleiters.

12. Verfahren nach einem der Ansprüche 1 bis 5, **dadurch gekennzeichnet, dass** das Einsetzen der Quellen in den Leiter die folgenden Schritte umfasst:
- ein Bereitstellen eines Streifens, entlang dessen eine längliche Vertiefung ausgebildet ist, wobei der Streifen wenigstens eine Aneinanderreihung von Emissionsquellen innerhalb der länglichen Vertiefung, welche entlang der länglichen Vertiefung fluchten, trägt,
- ein Aufsetzen der hohlen Seite des Streifens auf einen ersten Teil des Lichtleiters,
- ein Füllen der Vertiefung mit dem flüssigen oder pastösen Material, um einen zweiten Teil des Lichtleiters in Kontakt mit dem ersten Teil des Lichtleiters zu bilden.

13. Verfahren nach Anspruch 12, **dadurch gekennzeichnet, dass** der erste Teil des Lichtleiters vor dem Füllen fest ist, wobei der zweite Teil des Lichtleiters nach dem Füllen verfestigt wird.

14. Verfahren nach einem der Ansprüche 11 bis 13, **dadurch gekennzeichnet, dass** der Streifen zwei Aneinanderreihungen von Emissionsquellen innerhalb der länglichen Vertiefung trägt, wobei eine jede Aneinanderreihung dazu eingerichtet ist, Licht in eine andere Richtung zu emittieren.

15. Verfahren nach einem der Ansprüche 11 bis 14, **dadurch gekennzeichnet, dass** jede innerhalb der länglichen Vertiefung getragene Quelle dazu eingerichtet ist, Licht in eine Emissionsrichtung (9, 20, 21, 29), die zu einem Abschnitt der Vertiefung des diese Quelle tragenden Streifens im Wesentlichen parallel verläuft, zu emittieren.

16. Verfahren nach einem der Ansprüche 11 bis 15, **dadurch gekennzeichnet, dass** der Streifen auf der Seite der Rückstrahlseite des Leiters aufgebracht ist und Mittel umfasst, um durch die Emissionsquellen emittiertes und durch die Rückstrahlseite aufgenommenes Licht zum Inneren des Leiters zurückzusenden.

## Claims

1. Process for manufacturing a lighting module, **characterized in that**:
- emission sources are inserted into a light guide comprising a material which is initially liquid or pasty, the light guide (3) comprising a transmission face (4) arranged for transmitting light emitted by the emission sources (2, 19) towards an object to be lit and a return face (5) opposite the transmission face (4), the emission sources (2, 19) being inserted so that they are situated inside the light guide (3) between the transmission face (4) and the return face (5)
- the material of the guide is solidified after insertion of the sources into the guide
**characterized in that** during the insertion of the sources into the guide, the sources are carried by at least one printed circuit.

2. Process according to claim 1, **characterized in that** the insertion comprises a coating of the emission sources with the liquid or pasty material.

3. Process according to claim 1 or 2, **characterized in that** the sources are inserted so that the sources are situated in the guide without intermediate space between the guide and the emission sources, in particular without an air space.

4. Process according to any one of claims 1 to 3, **characterized in that** the emission sources (2, 19) are inserted between the transmission face (4) and the return face (5) so that the sources are arranged to emit light in a direction of emission (9, 20, 21, 29) substantially parallel to the return face (5).

5. Process according to any one of claims 1 to 4, **characterized in that** the guide comprises lateral edges connecting the transmission face and the return face, and **in that** at least one row of sources is inserted outside the lateral edges of the guide.

6. Process according to any one of claims 1 to 5, **characterized in that** the insertion comprises a moulding of at least one part of the guide on a substrate on which the emission sources are arranged.

7. Process according to claim 6, **characterized in that** a moulding face of the guide from the transmission or return faces is in contact with the substrate during moulding, the substrate comprising recessed and/or protruding structures distributed on its surface which is in contact with the moulded part of the guide during moulding so that the guide comprises respectively protrusions and/or recesses distributed on the moulding face.

8. Process according to any one of claims 6 to 7, **characterized in that** the substrate forms part of the module, the moulded part of the guide not being removed from the substrate.

9. Process according to claim 8, **characterized in that** the substrate comprises means (6, 12, 13) for returning towards the inside of the guide (3) the light emitted by the emission sources (2, 19) and received by the return face (5).

10. Process according to claim 8 or 9, **characterized in that** the substrate comprises means (33) for diffusing towards the outside of the guide (3), light emitted by the emission sources (2, 19) and received by the transmission face (4).

11. Process according to any one of claims 1 to 5, **characterized in that** the insertion of the sources into the guide comprises the following steps:
- providing a strip along which an elongated recess is formed, the strip carrying at least one line of emission sources situated inside the elongated recess and aligned along the elongated recess,
- filling the recess with the liquid or pasty material in order to form a second part of the light guide, and
- application or bonding of the strip onto a first main part of the light guide after solidification of the liquid or pasty material of the second part of the light guide.

12. Process according to any one of claims 1 to 5, **characterized in that** the insertion of the sources into the guide comprises the following steps:
- providing a strip along which an elongated recess is formed, the strip carrying at least one line of emission sources situated inside the elongated recess and aligned along the elongated recess,
- application of the recessed side of the strip onto a first part of the light guide,
- filling the recess with the liquid or pasty material in order to form a second part of the light guide in contact with the first part of the light guide.

13. Process according to claim 12, **characterized in that** before filling, the first part of the light guide is solid, the second part of the light guide being solidified after filling.

14. Process according to any one of claims 11 to 13, **characterized in that** the strip carries two lines of emission sources inside the elongated recess, each line being arranged to emit light in a different direction.

15. Process according to any one of claims 11 to 14, **characterized in that** each source carried inside the elongated recess is arranged to emit light in a direction of emission (9, 20, 21, 29) substantially parallel to a portion of the recess of the strip carrying this source.

16. Process according to any one of claims 11 to 15, **characterized in that** the strip is applied on the side of the return face of the guide, and comprises means for returning towards the inside of the guide, light emitted by the emission sources and received by the return face.
